# EUROPEAN PATENT SPECIFICATION

(11) **EP 4 495 587 B1**
(45) Date of publication and mention of the grant of the patent: **28.10.2026**
(21) Application number: 24185050.2
(22) Date of filing: 27.06.2024
(51) Int. Cl.: G01N 23/2252

(54) **SPECTRUM PROCESSING DEVICE, SPECIMEN ANALYZING DEVICE, AND SPECTRUM PROCESSING METHOD**
SPEKTRUMSVERARBEITUNGSVORRICHTUNG, PROBENANALYSEVORRICHTUNG UND SPEKTRUMSVERARBEITUNGSVERFAHREN
DISPOSITIF DE TRAITEMENT DE SPECTRE, DISPOSITIF D'ANALYSE D'ÉCHANTILLON ET PROCÉDÉ DE TRAITEMENT DE SPECTRE

(30) Priority: 18.07.2023 JP 2023116754
(43) Date of publication of application: 22.01.2025
(73) Proprietor: JEOL Ltd., Akishima-shi, Tokyo 196-8558 (JP)
(72) Inventor: EBATA, Yuka, Tokyo, 196-8558 (JP); FUJII, Atsuhiro, Tokyo, 196-8558 (JP)
(74) Representative: Boult Wade Tennant LLP

(56) References cited:
- WO-A2-2008/014463
- BRODUSCH NICOLAS ET AL: "Phase differentiation based on x-ray energy spectrum correlation with an energy dispersive spectrometer (EDS)", ULTRAMICROSCOPY, ELSEVIER, AMSTERDAM, NL, vol. 238, 113534, 19 April 2022 (2022-04-19), pages 1 - 12, XP087064352, ISSN: 0304-3991, [retrieved on 20220419], DOI: 10.1016/J.ULTRAMIC.2022.113534
- LIEBSKE CHRISTIAN: "iSpectra: An Open Source Toolbox For The Analysis of Spectral Images Recorded on Scanning Electron Microscopes", MICROSCOPY AND MICROANALYSIS, vol. 21, no. 4, 1 August 2015 (2015-08-01), pages 1006 - 1016, XP093220276, ISSN: 1431-9276, DOI: 10.1017/S1431927615014336
- ZANETTA P-M ET AL: "Modal abundance, density and chemistry of micrometer-sized assemblages by advanced electron microscopy: Application to chondrites", CHEMICAL GEOLOGY, vol. 514, 28 March 2019 (2019-03-28), pages 27 - 41, XP085658900, ISSN: 0009-2541, DOI: 10.1016/J.CHEMGEO.2019.03.025

## Description

### BACKGROUND OF THE INVENTION

### Field of the Invention

The present invention relates to a spectrum processing device, a specimen analyzing device, and a spectrum processing method.

### Description of Related Art

A scanning electron microscope equipped with an X-ray detector, such as an energy dispersive X-ray spectrometer (EDS) and a wavelength dispersive X-ray spectrometer (WDS), enables an acquisition of spectrum imaging data for liking a position on a specimen to an X-ray spectrum. Known techniques for determining a distribution of compounds by using spectrum imaging data include the phase analysis.

For example, JP-A-2018-200270 discloses a phase analyzing device which displays, in addition to a phase map indicating a distribution of compounds, a graph for expressing in areas an X-ray intensity of each element and concentration of each element, so that characteristics of the composition of the compounds are easily recognizable on display.

Methods for generating a phase map from spectrum imaging data include a method using a representative spectrum. Specifically, a representative spectrum representing the characteristics of a substance contained in an analysis area is selected from the spectrum imaging data, and an abundance of the representative spectrum is determined for each pixel of the spectrum imaging data. This abundance is then used as a pixel value to generate a phase map, which indicates a distribution of a phase (compounds). The composition of the phase of the generated phase map is acquired by the qualitative and the quantitative analysis of the representative spectrum.

The spectrum to be stored in each pixel of the spectrum imaging data presents a small signal amount and a low S/N ratio since the measurement time is short. Therefore the S/N ratio of the representative spectrum selected from the spectrum imaging data is low. This means that in some cases the composition of the phase cannot be accurately identified, even using the qualitative and the quantitative analysis on the representative spectrum.

WO 2008/014463 (A2) discloses a system for performing spectral microanalysis that delivers analysis results during the course of data collection. As spectra are collected from pixels on a specimen, the system periodically analyzes the spectra to statistically derive underlying spectra representing proposed specimen components, wherein the derived spectra combine in varying proportions to result (at least approximately) in the measured spectra at each pixel. Those pixels having the same dominant proposed component, and/or which contain at least approximately the same proportions of the proposed components, may then have their measured spectra combined (i.e., added or averaged). These spectra may then be cross-referenced via reference libraries to identify the components actually present.

Brodusch N et al "Phase differentiation based on x-ray energy spectrum correlation with an energy dispersive spectrometer (EDS)", Ultramicroscopy Vol 238, article no. 113534, pages 1-12, 19 April 2022 discloses a technique to produce phase maps based on the correlation between each hyperspectral image pixel spectrum and a set of standards spectra. The standards spectra can be obtained experimentally from bulk specimens of known materials but also via analytical computations.

### SUMMARY OF THE INVENTION

According to a first aspect of the present disclosure, there is provided a spectrum processing device including:
A spectrum processing device comprising:
a data acquiring unit configured to acquire, for each of pixels expressing positions on a specimen, spectrum imaging data in which a pixel spectrum based on a signal from the specimen is stored;
an extraction unit configured to compare, for each of the pixels, the pixel spectrum and a representative spectrum selected from the spectrum imaging data, and extract a plurality of the pixel spectra from the spectrum imaging data, based on a comparison result; and
a spectrum generating unit configured to generate a phase spectrum, based on the plurality of the extracted pixel spectra wherein
the extraction unit is further configured to calculates, for each of the pixels, an a first abundance of the a first representative spectrum in the pixel spectrum, or a first similarity between the pixel spectrum and the first representative spectrum, and create a first pixel data by extracting the pixel spectrum with the first abundance or the first similarity larger than a first threshold, wherein
the extraction unit is further configured to calculate, for each of the pixels, a second abundance of a second representative spectrum in the pixel spectrum, or a second similarity between the pixel spectrum and the second representative spectrum, and create a second pixel data by extracting the pixel spectrum with the second abundance or the second similarity larger than a second threshold, and wherein
the extraction unit is further configured to exclude each pixel spectrum extracted from a same pixel from the first pixel data and the second pixel data.

According to a second aspect of the present disclosure, there is provided a specimen analyzing device including the above spectrum processing device.

According to a third aspect of the present disclosure, there is provided a spectrum processing method including:
acquiring, for each of pixels expressing positions on a specimen, spectrum imaging data in which a pixel spectrum based on a signal from the specimen is stored;
comparing, for each of the pixels, the pixel spectrum and a representative spectrum selected from the spectrum imaging data, and extracting a plurality of the pixel spectra from the spectrum imaging data, based on a comparison result;
generating a phase spectrum, based on the plurality of the extracted pixel spectra;
calculating, for each of the pixels, a first abundance of a first representative spectrum in the pixel spectrum, or a first similarity between the pixel spectrum and the first representative spectrum, and creates a first pixel data by extracting the pixel spectrum with the first abundance or the first similarity larger than a first threshold;
calculating, for each of the pixels, a second abundance of a second representative spectrum in the pixel spectrum, or a second similarity between the pixel spectrum and the second representative spectrum, and creates a second pixel data by extracting the pixel spectrum with the second abundance or the second similarity larger than a second threshold; and
excluding each pixel spectrum extracted from a same pixel from the first pixel data and the second pixel data.

### BRIEF DESCRIPTION OF THE DRAWINGS

FIG. 1 illustrates a configuration of a specimen analyzing device that includes a spectrum processing device according to Embodiment 1.
FIG. 2 illustrates spectrum imaging data.
FIG. 3 illustrates a configuration of a spectrum processing device according to Embodiment 1.
FIG. 4 is a flow chart illustrating an example of a flow of phase map generating process.
FIG. 5 illustrates an example of a first phase map.
FIG. 6 is a flow chart illustrating an example of a flow of process for generating phase spectrum.
FIG. 7 illustrates first pixel data.
FIG. 8 illustrates process for excluding a pixel spectrum extracted from a same pixel.
FIG. 9 illustrates an example of a first pixel map.
FIG. 10 illustrates a state where the first pixel map is superimposed on an electron microscope image for display.
FIG. 11 illustrates a state where the first pixel map is superimposed on the first phase map for display.
FIG. 12 illustrates a configuration of a spectrum processing device according to Embodiment 2.
FIG. 13 is a flow chart illustrating a flow of process for generating phase spectrum.
FIG. 14 illustrates a configuration of a spectrum processing device according to Embodiment 3.
FIG. 15 is a flow chart illustrating an example of a flow of process for generating phase spectrum.
FIG. 16 illustrates a configuration of a spectrum processing device according to Embodiment 4.
FIG. 17 is a flow chart illustrating an example of a flow of process for generating phase spectrum.

### DESCRIPTION OF THE INVENTION

According to one aspect of the present disclosure, there is provided a spectrum processing device including:
a data acquiring unit configured to acquire, for each of pixels expressing positions on a specimen, spectrum imaging data in which a pixel spectrum based on a signal from the specimen is stored;
an extraction unit configured to compare, for each of the pixels, the pixel spectrum and a representative spectrum selected from the spectrum imaging data, and extract a plurality of the pixel spectra from the spectrum imaging data, based on a comparison result; and
a spectrum generating unit configured to generate a phase spectrum, based on the plurality of the extracted pixel spectra.

This spectrum processing device enables a generation of a phase spectrum having a high S/N ratio and an accurate identification of the composition of the phase.

According to a second aspect of the present disclosure, there is provided a specimen analyzing device including the above spectrum processing device.

According to a third aspect of the present disclosure, there is provided a spectrum processing method including:
acquiring, for each of pixels expressing positions on a specimen, spectrum imaging data in which a pixel spectrum based on a signal from the specimen is stored;
comparing, for each of the pixels, the pixel spectrum and a representative spectrum selected from the spectrum imaging data, and extracting a plurality of the pixel spectra from the spectrum imaging data, based on a comparison result; and
generating a phase spectrum, based on the plurality of the extracted pixel spectra.

This spectrum processing method enables a generation of a phase spectrum having a high S/N ratio and an accurate identification of the composition of the phase.

Now preferred embodiments of the present invention will be described in detail with reference to the drawings. The embodiments described below are not intended to unduly limit the contents of the present invention described in the claims. Further, all of the components described below are not necessarily essential requirements of the present invention.

### 1. Embodiment 1

### 1.1. Specimen Analyzing Device

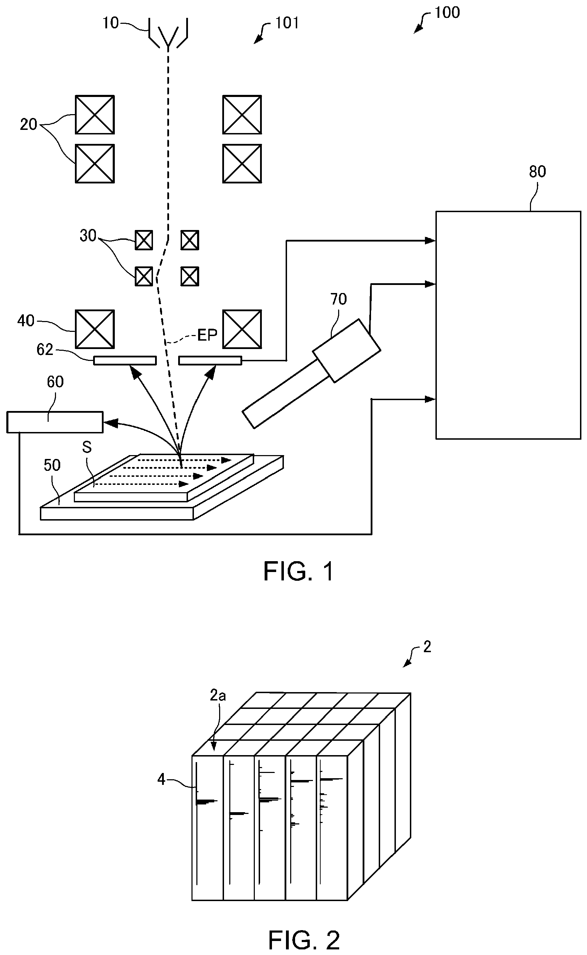

A spectrum processing device according to Embodiment 1 will be described first, with reference to the drawings. FIG. 1 illustrates a configuration of a specimen analyzing device 100 that includes the spectrum processing device 80 according to Embodiment 1.

As illustrated in FIG. 1, the specimen analyzing device 100 includes: an electron gun 10, a condenser lens 20, a scanning coil 30, an objective lens 40, a specimen stage 50, a secondary electron detector 60, a backscattered electron detector 62, an X-ray detector 70, and a spectrum processing device 80. The specimen analyzing device 100 is a scanning electron microscope equipped with the X-ray detector 70.

The electron gun 10 emits an electron beam. For example, the electron gun 10 accelerates at an anode electrons emitted from the cathode. In this manner it emits the electron beam. The condenser lens 20 and the objective lens 40 focus the electron beam emitted from the electron gun 10, so that an electron probe EP is formed. The probe diameter and the probe current can be controlled by the condenser lens 20. The scanning coil 30 can two-dimensionally deflect the electron probe EP. The electron probe EP, as two-dimensionally deflected by the scanning coil 30, can scan over the specimen S.

The specimen stage 50 holds a specimen S. The specimen stage 50 includes a moving mechanism to move the specimen S.

The secondary electron detector 60 detects secondary electrons that are emitted from the specimen S as is irradiated with the electron beam. A secondary electron image can be acquired by detecting using the secondary electron detector 60 the secondary electrons emitted from the specimen S as scanned using the electron probe EP.

The backscattered electron detector 62 detects backscattered electrons that are emitted from the specimen S as irradiated with the electron beam. A backscattered electron image can be acquired by detecting using the backscattered electron detector 62 emitted from the specimen S as scanned using the electron probe EP.

The X-ray detector 70 detects a characteristic X-ray which is emitted from the specimen S when the specimen S is irradiated with the electron beam. The X-ray detector 70 is an energy dispersive X-ray detector, for example. The X-ray detector 70 may also be a wavelength dispersive X-ray spectrometer. Spectrum imaging data can be acquired by detecting using the X-ray detector 70 the characteristic X-ray emitted from the specimen S as scanned using the electron probe EP.

The electron gun 10, the condenser lens 20, the scanning coil 30, the objective lens 40, the specimen stage 50, the secondary electron detector 60, the backscattered electron detector 62, and the X-ray detector 70 constitute a main unit 101 of the specimen analyzing device 100.

FIG. 2 illustrates the spectrum imaging data 2. The spectrum imaging data 2 are data for linking a position (coordinates) on the specimen S to a spectrum based on a signal from the specimen S. Here the signal from the specimen S is a characteristic X-ray emitted from the specimen S. The spectrum imaging data 2 includes a plurality of pixels 2a, each of which corresponds to a position on the specimen S. A pixel spectrum 4 is stored in each pixel 2a. The pixel spectrum 4 is an X-ray spectrum acquired by detecting an X-ray generated at a position on the specimen S indicated by the pixel 2a.

In the main unit 101 of the specimen analyzing device 100, the X-ray detector 70 detects an X-ray while the electron probe EP scans the specimen S, and stores the position (coordinates) on the specimen S as linked to the X-ray spectrum. In this manner the spectrum imaging data 2 can be acquired.

The spectrum processing device (information processing device) 80 performs the phase analysis using the spectrum imaging data 2, and generates a phase map as a result of the phase analysis. The spectrum processing device 80 also generates a phase spectrum to identify the composition of the phase. The phase map is a map that indicates distribution of the phase (compound or simple substance). The phase spectrum is a spectrum that is used for identifying the composition of the phase. The phase map and the phase spectrum are generated for each phase.

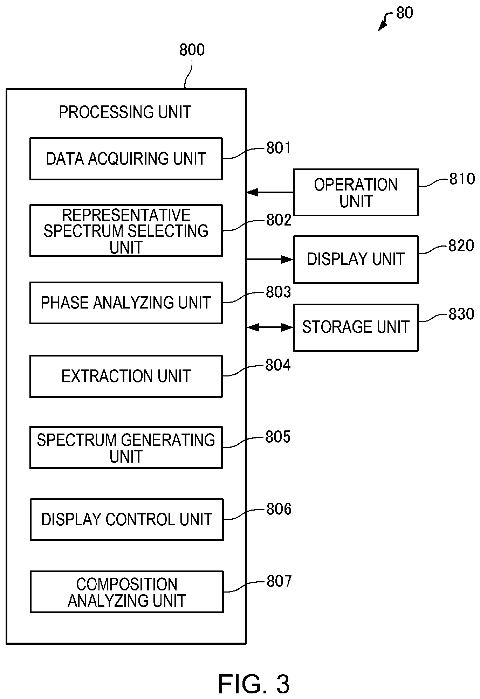

FIG. 3 illustrates a configuration of the spectrum processing device 80.

As illustrated in FIG. 3, the spectrum processing device 80 includes a processing unit 800, an operation unit 810, a display unit 820, and a storage unit 830.

The operation unit 810 is for the user to input operation information, and outputs the inputted operation information to the processing unit 800. The functions of the operation unit 810 can be implemented using such input devices as a keyboard, a mouse, buttons, a touch panel, and a touch pad.

The display unit 820 displays an image generated by the processing unit 800, and its functions can be fulfilled by such a display as a liquid crystal display (LCD) and a cathode ray tube (CRT).

The storage unit 830 stores programs allowing a computer to function as each component of the processing unit 800 and various data. The storage unit 830 also functions as a work area of the processing unit 800. The functions of the storage unit 830 can be fulfilled by a hard disk, a random access memory (RAM), or the like.

The processing unit 800 executes some of the programs stored in the storage unit 830 to function respectively as a data acquiring unit 801, a representative spectrum selecting unit 802, a phase analyzing unit 803, an extraction unit 804, a spectrum generating unit 805, a display control unit 806, and a composition analyzing unit 807 (to be described below). The functions of the processing unit 800 can be fulfilled by executing programs using various processors (e.g. CPU, DSP) and such hardware as ASIC (e.g. gate array). The processing unit 800 includes the data acquiring unit 801, the representative spectrum selecting unit 802, the phase analyzing unit 803, the extraction unit 804, the spectrum generating unit 805, the display control unit 806, and the composition analyzing unit 807.

The data acquiring unit 801 acquires the spectrum imaging data 2 derived from scanning the specimen S using the specimen analyzing device 100. The spectrum processing device 80 is connected to the main unit 101 of the specimen analyzing device 100. When the spectrum imaging data 2 is acquired by the main unit 101, the spectrum imaging data 2 is sent from the main unit 101 to the spectrum processing device 80.

The representative spectrum selecting unit 802 selects a representative spectrum from the spectrum imaging data 2. The representative spectrum is a spectrum that represents the characteristics of the phase. The representative spectrum is one of a plurality of pixel spectra 4 stored in the spectrum imaging data 2. The representative spectrum selecting unit 802 selects one representative spectrum for each phase. For example, the representative spectrum selecting unit 802 selects a representative spectrum from the spectrum imaging data 2 using such a known technique as the vertex component analysis (VCA), pixel purity index (PPI), and N-FINDR. A number of representative spectra (a number of phases) to be selected here may be specified by the user, or may be calculated by the representative spectrum selecting unit 802 based on the spectrum imaging data 2.

The phase analyzing unit 803 performs phase analysis by analyzing the spectrum imaging data 2. The phase analysis refers to analyzing the spectrum imaging data 2 and creating a spatial distribution (phase map) of a substance having an equivalent spectrum, that is, equivalent composition, as well as a spectrum (phase spectrum) of the substance.

The phase analyzing unit 803 compares the pixel spectrum 4 and the representative spectrum for each pixel 2a of the spectrum imaging data 2, for example, and creates a phase map based on the comparison result. The phase analyzing unit 803 calculates an abundance of the representative spectrum in the pixel spectrum 4 for each pixel 2a, and creates data for linking the abundance to the coordinates of the pixel 2a. The abundance is a coefficient that is used when the pixel spectrum 4 is expressed based on the representative spectrum as a reference. For example, where the pixel spectrum 4 and the representative spectrum are taken as a vector respectively, the abundance is calculated by performing the projection operation of the pixel spectrum 4 to the representative spectrum. It is also possible to define, for example, the abundance as a coefficient of each representative spectrum when the pixel spectrum 4 is fitted by using all the representative spectra.

The phase analyzing unit 803 creates a phase map based on the data linking the abundance to the coordinates of the pixel 2a. For example, the phase analyzing unit 803 creates a phase map, where the abundance is expressed as a pixel value (brightness value). In other words, in the phase map generated by the phase analyzing unit 803, a pixel value of each pixel becomes a value in accordance with the abundance calculated for the corresponding pixel 2a. For each of the selected representative spectra, the phase analyzing unit 803 creates a phase map. This means that the phase analyzing unit 803 creates as many phase maps as selected representative spectra.

The extraction unit 804 and the spectrum generating unit 805 perform process for generating a phase spectrum.

The extraction unit 804 compares the pixel spectrum 4 and the representative spectrum for each pixel 2a, and extracts each pixel spectrum 4 from the spectrum imaging data 2 based on the comparison result.

Specifically, the extraction unit 804 sets first a threshold to extract the pixel spectrum 4 from the spectrum imaging data 2. The extraction unit 804 sets the threshold based on the threshold the specified by the user. For example, when the user specifies a threshold by operating the operation unit 810, the extraction unit 804 sets the threshold based on the threshold specified by the user via the operation unit 810. The user may specify the threshold by inputting an arbitrary numerical value by operating the operation unit 810, or may specify the threshold by selecting one of the options displayed on a graphical user interface (GUI). The extraction unit 804 may also set the threshold by reading information on the threshold that is stored in advance in the storage unit 830. A different threshold value may be set for each phase, or a same threshold value may be set for a plurality of phases.

Then, for each pixel 2a, the extraction unit 804 calculates an abundance of the representative spectrum in the pixel spectrum 4, and specifies a pixel 2a with the abundance larger than the threshold. The extraction unit 804 extracts a pixel spectrum 4 stored in a pixel 2a with the abundance larger than the threshold. The above process allows an extraction of the pixel spectrum 4.

The extraction unit 804 performs the above mentioned process for extracting the pixel spectrum 4 for each phase. When the pixel spectrum 4 is extracted for each phase, the extraction unit 804 excludes a pixel spectrum 4 from the same pixel 2a extracted in different phases. In this manner it is possible to extract a pixel spectrum 4, in which the composition of the phase is purely expressed.

The spectrum generating unit 805 generates a phase spectrum based on the pixel spectra 4 extracted by the extraction unit 804. The spectrum generating unit 805 adds or averages the plurality of pixel spectra 4 extracted for each phase, and generates a phase spectrum for each phase. In other words, the spectrum generating unit 805 generates as many phase spectra as the representative spectra.

The display control unit 806 displays on the display unit 820 the information on the position of the pixel 2a in which the extracted pixel spectrum 4 is stored (hereafter also called "extracted pixel"). The extracted pixel 2a forms a part of the pixels 2a of the spectrum imaging data 2, in which a spectrum used for generating the phase spectrum is stored. For example, the display control unit 806 generates a pixel map that expresses a position of the extracted pixel 2a, and displays the generated pixel map on the display unit 820. Further, the display control unit 806 causes the display unit 820 to display the image of the specimen S, such as a secondary electron image and a backscattering electron image, and the generated pixel map superimposed.

The composition analyzing unit 807 performs the qualitative and the quantitative analysis on the phase spectrum, and identifies the composition of a phase. The composition analyzing unit 807 performs the qualitative and the quantitative analysis on each phase spectrum, and identifies the composition of each phase.

### 1.2. Spectrum Processing Method

### 1.2.1. Generation of Phase Map

A spectrum processing method using the spectrum processing device 80 will be described next. Here process of generating phase map in the spectrum processing device 80 will be described first.

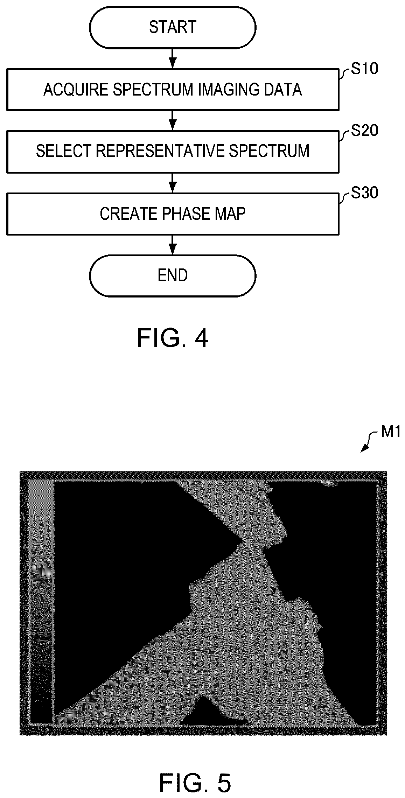

FIG. 4 is a flow chart illustrating an example of a flow of the process for generating phase map of the spectrum processing device 80.

First the data acquiring unit 801 acquires spectrum imaging data 2 from scanning over the specimen S in the main unit 101 of the specimen analyzing device 100 (S10).

In the main unit 101, the X-ray detector 70 detects an X-ray while the electron probe EP scans the specimen S, and stores the position on the specimen S as linked to the X-ray spectrum. In this manner the spectrum imaging data 2 in FIG. 2 is acquired. When the spectrum imaging data 2 is acquired by the main unit 101, the spectrum imaging data 2 is sent from the main unit 101 to the spectrum processing device 80.

Then the representative spectrum selecting unit 802 selects a representative spectrum from the spectrum imaging data 2 acquired by the data acquiring unit 801 (S20).

For example, the representative spectrum selecting unit 802 selects a representative spectrum from the spectrum imaging data 2 using such a known technique as the vertex component analysis (VCA), the pixel purity index (PPI), and the N-FINDR. The representative spectrum selecting unit 802 selects a representative spectrum respectively for a first phase to an n-th phase (n is an integer that is at least 2), which are mutually different phases. In the following description, a representative spectrum for an m-th phase (m is an integer ranging from 1 to n) is called "m-th representative spectrum". The representative spectrum selecting unit 802 selects the first to n-th representative spectra.

Then, for each pixel 2a, the phase analyzing unit 803 compares the pixel spectrum 4 and the representative spectrum, and creates a phase map based on the comparison result (S30).

For each pixel 2a, the phase analyzing unit 803 calculates an abundance of a first representative spectrum in the pixel spectrum 4, and creates a first phase map in which the abundance is expressed as the pixel value. The first phase map is a phase map indicating distribution of the first phase. In the following description, a phase map indicating the distribution of the m-th phase is called the "m-th phase map".

Then, for each pixel 2a, the phase analyzing unit 803 calculates the abundance of a second representative spectrum in the pixel spectrum 4, and creates a second phase map in which a value proportional to the abundance is the phase value. The phase analyzing unit 803 calculates the abundance for each of the third and later representative spectra in a same manner, and performs processing to creates the phase map, and creates the third to n-th phase maps. Thus the phase analyzing unit 803 creates the first to n-th phase maps.

FIG. 5 illustrates an example of the first phase map M1. As illustrated in FIG. 5, in the first phase map M1, the brightness value of each pixel indicates the abundance calculated for each pixel.

### 1.2.2. Generation of Phase Spectrum

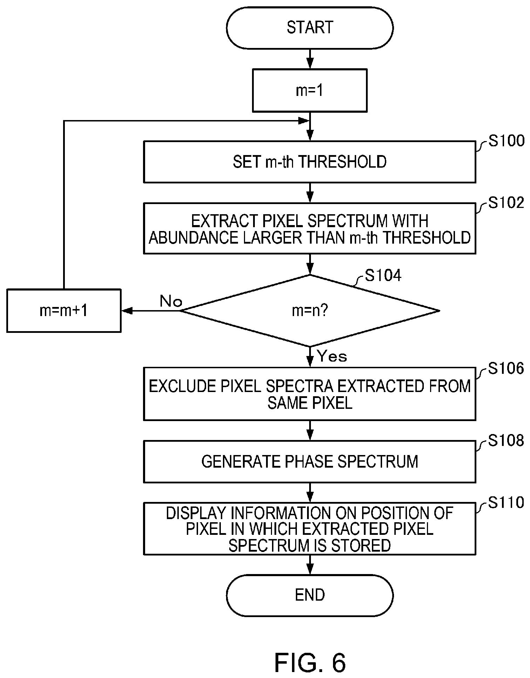

A process of generating phase spectrum by the spectrum processing device 80 will be described next. FIG. 6 is a flow chart illustrating an example of a flow of the process of generating phase spectrum by the spectrum processing device 80.

The extraction unit 804 sets an m-th threshold to generate a phase spectrum of the m-th phase (S100). Here given m = 1, the extraction unit 804 sets a first threshold to generate a phase spectrum of the first phase. The extraction unit 804 may set the first threshold based on the first threshold specified by the user, or may set it by reading information on the first threshold recorded in advance in the storage unit 830.

Then, for each pixel 2a of the spectrum imaging data 2, the extraction unit 804 calculates the abundance of the first representative spectrum in the pixel spectrum 4, and extracts a pixel spectrum 4 with its abundance larger than the first threshold (S102). In this manner the pixel spectrum 4 with its abundance larger than the first threshold can be extracted from the spectrum imaging data 2. The extraction unit 804 creates first pixel data D-1 linking the extracted pixel spectrum 4 to the coordinates of the pixel 2a in which the extracted pixel spectrum 4 is stored (coordinates of the extracted pixel 2a), and causes the storage unit 830 to store this first pixel data D-1.

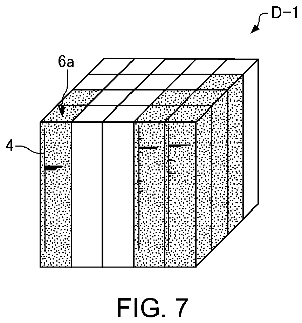

FIG. 7 illustrates first pixel data. As illustrated in FIG. 7, the first pixel data D-1 includes a plurality of pixels 6a corresponding to the plurality of pixels 2a of the spectrum imaging data 2. The example in FIG. 7 illustrates as hatched a pixel 6a, in which the extracted pixel spectrum 4 is stored. The extraction unit 804 causes the pixel 6a corresponding to this pixel 2a to store the pixel spectrum 4 as extracted from the pixel 2a in. In this manner the information on the extracted pixel spectrum 4 and on the coordinates of the pixel 2a, in which the extracted pixel spectrum 4 is stored, is registered in the first pixel data D-1.

Here the first pixel data D-1 is expressed in map format, but the first pixel data D-1 may be also expressed as a list of the extracted pixel spectrum 4 and the coordinates of the pixel 2a in which the extracted pixel spectrum 4 is stored.

The extraction unit 804 determines whether the process for extracting the pixel spectrum 4 has been performed for all the phases (S104). In other words, the extraction unit 804 determines whether m = n is satisfied. If the extraction unit 804 determines that m = n is not satisfied (No in S104), the extraction unit 804 sets a second threshold to generate the phase spectrum of the second phase with m = 1+1 (S100). The extraction unit 804 may set the second threshold based on the second threshold specified by the user, or may set the second threshold following readout of the information on the second threshold recorded in advance in the storage unit 830. Further, the extraction unit 804 may set a same value as the first threshold for the second threshold. In other words, the first threshold to the n-th threshold that are set in the process S 100 may be a same value.

For each pixel 2a, the extraction unit 804 calculates the abundance of the second representative spectrum in the pixel spectrum 4, and extracts a pixel spectrum 4 with abundance larger than the second threshold (S102). The extraction unit 804 creates second pixel data associating the extracted pixel spectrum 4 and the coordinates of the pixel 2a in which the extracted pixel spectrum 4 is stored, and causes the storage unit 830 to store this second pixel data.

In this way, the extraction unit 804 repeats the processes S100, S102 and S104 until it is determined that the process for extracting the pixel spectrum 4 has been performed for all the phases. The extraction unit 804 creates the first to n-th pixel data by repeating the processes S100, S102 and S104.

If the extraction unit 804 determines that the process for extracting the pixel spectrum 4 has been performed for all the phases (Yes in S104), it excludes each pixel spectrum 4 extracted from a same pixel 2a from the first to n-th pixel data (S106).

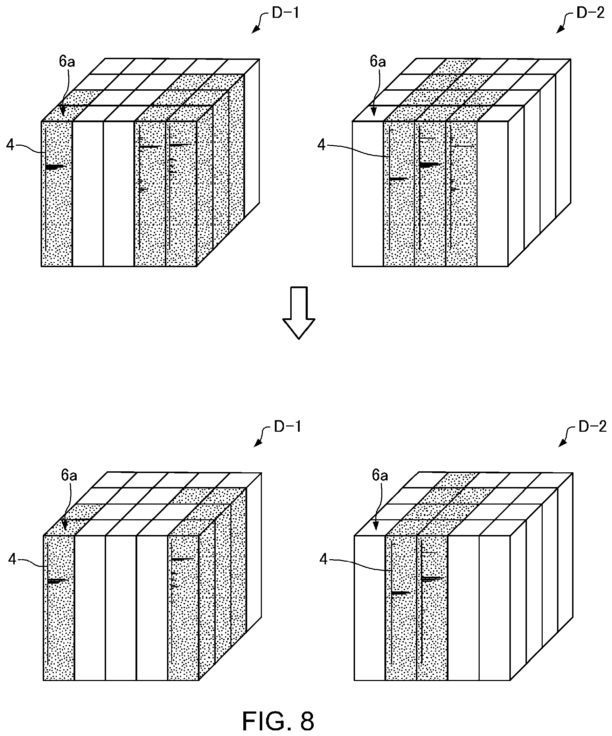

FIG. 8 illustrates the process for excluding each pixel spectrum 4 extracted from a same pixel 2a. As illustrated in FIG. 8, if the first pixel data D-1 and the second pixel data D-2 include a pixel spectrum 4 extracted from a same pixel 2a of the spectrum imaging data 2, the pixel spectrum 4 extracted from the same pixel 2a is excluded from the first pixel data D-1 and the second pixel data D-2. Thereby pixel spectrum 4 with the composition of the phase purely expressed can be extracted.

In the preceding paragraph a pixel spectrum 4 extracted from a same pixel 2a in the two pixel data is excluded, but as a pixel spectrum 4 extracted from the same pixel 2a is common to three or more pixel data as well, the pixel spectrum 4 extracted from the same pixel 2a is excluded from each pixel data.

Then the spectrum generating unit 805 generates a phase spectrum based on the extracted pixel spectra 4 (S108).

The spectrum generating unit 805 acquires information on the extracted pixel spectra 4 from the first pixel data D-1, and generates a phase spectrum of the first phase by adding or averaging the extracted pixel spectra 4. A plurality of pixel spectra 4 are added or averaged in this manner to generate a phase spectrum, so that the S/N ratio of the phase spectrum can achieve an improvement as compared with a use of a single pixel spectrum 4 as the phase spectrum.

In the same manner, the spectrum generating unit 805 acquires information on the extracted pixel spectra 4 from the second pixel data D-2, and generates a phase spectrum of the second phase by adding or averaging the extracted pixel spectra 4. The spectrum generating unit 805 generates the phase spectra of the third to n-th phases in the same manner as the phase spectrum of the first phase. The phase spectra of the first to n-th phases generated by the spectrum generating unit 805 are displayed on the display unit 820.

The display control unit 806 causes the display unit 820 to display the information on a position of each pixel 2a in which the extracted pixel spectrum 4 is stored (extracted pixel 2a) (S110).

The display control unit 806 generates a first pixel map that expresses each position of the extracted pixel 2a from the first pixel data D-1. In the same manner, the display control unit 806 generates a second pixel map that expresses each position of the extracted pixel 2a from the second pixel data D-2. The display control unit 806 also generates the third to n-th pixel maps in the same manner as the first pixel map. The display control unit 806 causes the display unit 820 to display the first to n-th pixel maps.

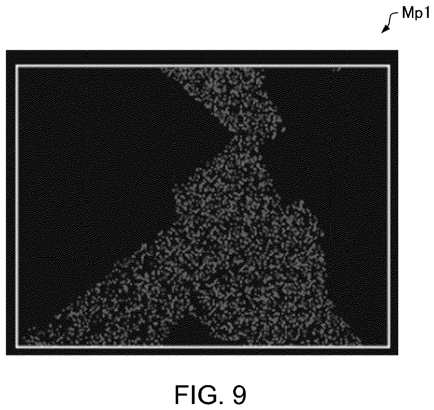

FIG. 9 illustrates an example of the first pixel map Mp1. The first pixel map Mp1 is a map indicating each position of the pixel 2a in which the pixel spectrum 4 used for generating the phase spectrum of the first phase is stored. In the first pixel map Mp1 illustrated in FIG. 9, a pixel corresponding to the extracted pixel 2a is indicated in red, and a pixel 2a other than the extracted pixel 2a, that is, a pixel 2a not subject to extraction of the pixel spectrum 4 among the pixels 2a of the spectrum imaging data 2, is indicated in black. The first pixel map Mp1 notifies where on the specimen S each pixel spectrum 4 used for generating the phase spectrum of the first phase is.

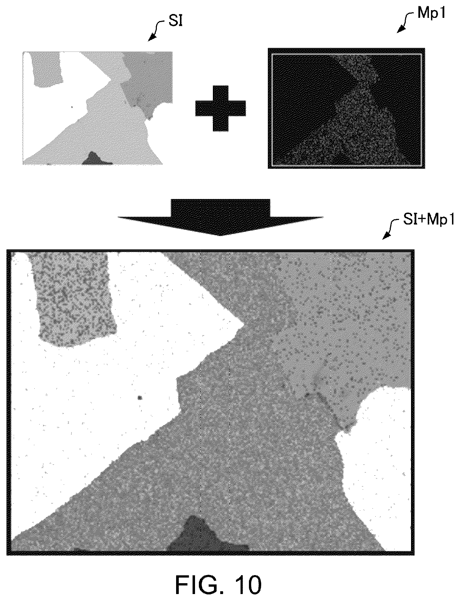

FIG. 10 illustrates a state where the first pixel map Mp1 is superimposed on a scanning electron microscopic image SI for display. As illustrated in FIG. 10, the display control unit 806 may cause the display unit 820 to display an image SI + Mp1, generated by superimposing the first pixel map Mp1 and a scanning electron microscopic image SI (e.g. secondary electron image, backscattered electron image). In this way, the display control unit 806 may display the first pixel map Mp1 and the pixels of the specimen S superimposed.

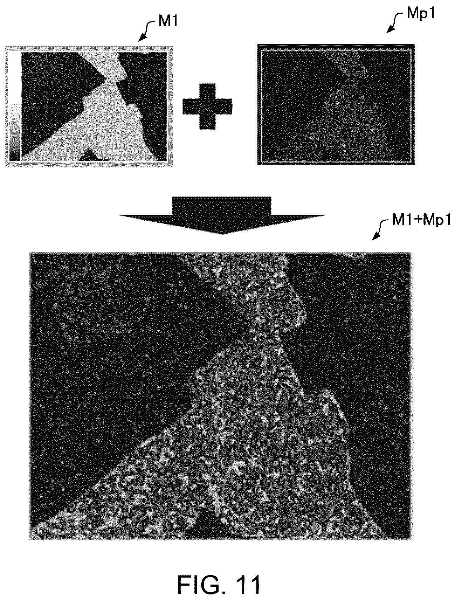

FIG. 11 illustrates a state where the first pixel map Mp1 is superimposed on a first phase map M1 for display. As illustrated in FIG. 11, the display control unit 806 may cause the display unit 820 to display an image M1 + Mp1, generated by superimposing the first pixel map Mp1 and the first phase map M1.

The display control unit 806 displays the second to n-th pixel maps in the same manner as the first pixel map Mp1. After displaying the first to n-th pixel maps on the display unit 820, the processing unit 800 ends the process for generating phase spectrum.

In the foregoing description the pixel map is displayed as the information on each position of the extracted pixel 2a, but the technique for displaying the information on the position of the extracted pixel 2a is not limited to the pixel map. For example, a list of coordinates of the extracted pixel 2a may be displayed as the information on the position of the extracted pixel 2a on the display unit 820.

The user checks the phase spectra of the first to n-th phases displayed on the display unit 820, so as to see whether the S/N ratio of each phase spectrum is sufficient. For example, if the user determines that the S/N ratio of the phase spectrum of the first phase is not sufficient, the user specifies a lower value for the first threshold, and causes the spectrum processing device 80 to execute the process for generating phase spectrum in FIG. 6 again. In this manner the phase spectrum of the first phase having a high S/N ratio can be acquired. If it is determined that the S/N ratio of each phase spectrum of the second to n-th phases as well, the user specifies a lower value for the threshold, and causes the spectrum processing device 80 to execute the process for generating phase spectrum in FIG. 6 again.

If the user determines that the S/N ratios of the phase spectra of all the phases are sufficient, the user checks the first to n-th pixel maps displayed on the display unit 820, and see whether each pixel map includes a region representing a mixture of other phases. For example, in a case where the first pixel map Mp1 includes a region representing a mixture of the second phase, the user specifies a higher value for the first threshold, and causes the spectrum processing device 80 to execute the process of generating phase spectrum in FIG. 6 again. In this manner the phase spectrum with the composition of the first phase purely expressed can be acquired. The same applies to the second to n-th pixel maps as well: if these include another phase, the user specifies a higher value for the threshold, and causes the spectrum processing device 80 to execute the process of generating phase spectrum in FIG. 6 again.

If the user determines that the S/N ratio of each phase spectrum is sufficient and each pixel map includes no region representing a mixture of another phase, the user causes the composition analyzing unit 807 to perform the qualitative and the quantitative analysis on the phase spectrum of the first phase, and identifies the composition of the first phase. In the same manner, the user causes the composition analyzing unit 807 to perform the qualitative and the quantitative analysis on the phase spectrum of the second phase, and identifies the composition of the second phase. For the third to n-th phases as well, the user causes the composition analyzing unit 807 to perform the qualitative and the quantitative analysis on the phase spectrum of each phase, and identifies the composition of each phase. In this manner the composition of each phase of the first to n-th phases can be identified.

### 1.3. Effects

The spectrum processing device 80 includes: the data acquiring unit 801 which acquires, for each pixel 2a expressing a position on the specimen S, spectrum imaging data 2 in which the pixel spectrum 4 is stored; the extraction unit 804 which compares, for each pixel 2a, the pixel spectrum 4 and the representative spectrum selected from the spectrum imaging data 2, and extracts a plurality of pixel spectra 4 from the spectrum imaging data 2 based on the comparison result; and the spectrum generating unit 805 which generates the phase spectrum based on the plurality of extracted pixel spectra 4. This enables a generation of a phase spectrum having a high S/N ratio and an accurate identification of the composition of the phase in the spectrum processing device 80. Generally the pixel spectra 4 stored in the pixel 2a of the spectrum imaging data 2 requires a shorter measurement time than a spectrum acquired by point analysis, where one point of the specimen S is illuminated, resulting in smaller signal amount and a lower S/N ratio. The phase analysis enables a creation of the phase map based on the abundance of the representative spectrum in the pixel spectrum 4, therefore even a low S/N ratio of the pixel spectrum 4 well allows us to obtain a phase map reflecting the distribution of the phase.

However, in identifying the composition of a phase, a representative spectrum in the pixel spectrum of one pixel presents a low S/N ratio, thus the composition of the phase cannot be accurately identified. The S/N ratio of the representative spectrum can be improved, for example, by increasing the measurement time to acquire the spectrum imaging data 2, or by increasing the illumination current of the electron probe EP for illuminating the specimen S. However it takes more time for measurement, or damage to the specimen S increases.

Whereas the spectrum processing device 80 allows a generation of a phase spectrum having a high S/N ratio without causing such problems.

In the spectrum processing device 80, the extraction unit 804 calculates the abundance of the representative spectrum in the pixel spectrum 4 for each pixel 2a, and extracts a pixel spectrum 4 with the abundance larger than the threshold. In this manner the spectrum processing device 80 can reduce dependence of the results of identifying the composition of the phase on the users.

For example, according to a possible method for improving the S/N ratio of the phase spectrum, the user specifies a region on the spectrum imaging data 2, extracts pixel spectra 4 recorded in a plurality of pixels 2a included in the specified region, and generates a phase spectrum by adding or averaging the extracted pixel spectra 4. However, this method depends on the user, as the same user specifies the region. Further, this method sometimes gives rise to substances scattered apart (e.g. sparse particles in the analysis visual field), which make it difficult for the user to specify the region on the spectrum imaging data 2, and prevent an appropriate extraction of the pixel spectrum 4.

Whereas the spectrum processing device 80, where a pixel spectrum 4 with the abundance larger than the threshold is extracted, can reduce dependence of the result of identifying the composition of the phase on the user. Furthermore, even substances scattered apart allow an appropriate extraction of the pixel spectrum 4 recorded in each pixel 2a corresponding to each of the substances scattered apart.

In the case of the spectrum processing device 80, the extraction unit 804 sets the threshold based on the threshold as specified by the user. In this manner the spectrum processing device 80 enables the user to specify the threshold.

The spectrum processing device 80 includes the display control unit 806 that causes the display unit 820 to display information on the position of the pixel 2a in which the extracted pixel spectrum 4 is stored (extracted pixel 2a). The display control unit 806 also generates the pixel map that indicates the position of each extracted pixel 2a, and causes the display unit 820 to display the pixel map. In this manner the spectrum processing device 80 enables the user to check the validity of the phase spectrum.

For example, if the phase spectrum generated by the spectrum generating unit 805 presents a peak of an unexpected element, it can be determined whether the peak of the unexpected element is due to another substance by checking the pixel map. For example, if the pixel map allows the confirmation that the extracted pixel 2a exists at a boundary or at a region close to a boundary with another substance, it is possible that the unexpected element is due to this substance.

In the spectrum processing device 80, the display control unit 806 causes the display unit 820 to display the image of the specimen S and the pixel map superimposed. In this manner the spectrum processing device 80 enables the user to easily check the validity of the phase spectrum.

In the spectrum processing device 80, the spectrum generating unit 805 generates the phase spectrum by adding or averaging a plurality of extracted pixel spectra 4. In this manner the spectrum processing device 80 allows a generation of a phase spectrum having a high S/N ratio.

The spectrum processing device 80 includes the composition analyzing unit 807 that identifies the composition of the phase from the phase spectrum. As the spectrum processing device 80 allows a generation of a phase spectrum having a high S/N ratio, the composition analyzing unit 807 enables an accurate identification of the composition of the phase can be in.

The spectrum processing device 80 includes the representative spectrum selecting unit 802 which selects a representative spectrum from the spectrum imaging data 2. In this manner, the spectrum processing device 80 enables an automatic selection of the representative spectrum.

The specimen analyzing device 100 includes the spectrum processing device 80. In this manner, the specimen analyzing device 100 allows a generation of a phase spectrum having a high S/N ratio, and an accurate identification of the composition of the phase.

The spectrum processing method according to Embodiment 1 includes: a step of acquiring, for each pixel 2a expressing a position on the specimen S, spectrum imaging data 2 in which the pixel spectrum 4 is stored; a step of comparing, for each pixel 2a, the pixel spectrum 4 and the representative spectrum selected from the spectrum imaging data 2, and extracting a plurality of pixel spectra 4 from the spectrum imaging data 2 based on the comparison result; and a step of generating the phase spectrum based on the plurality of the extracted pixel spectra 4. In this manner the spectrum processing method according to Embodiment 1 enables a generation of a phase spectrum having a high S/N ratio can be as well as an accurate identification of the composition of the phase.

### 2. Embodiment 2

### 2.1. Spectrum Processing Device

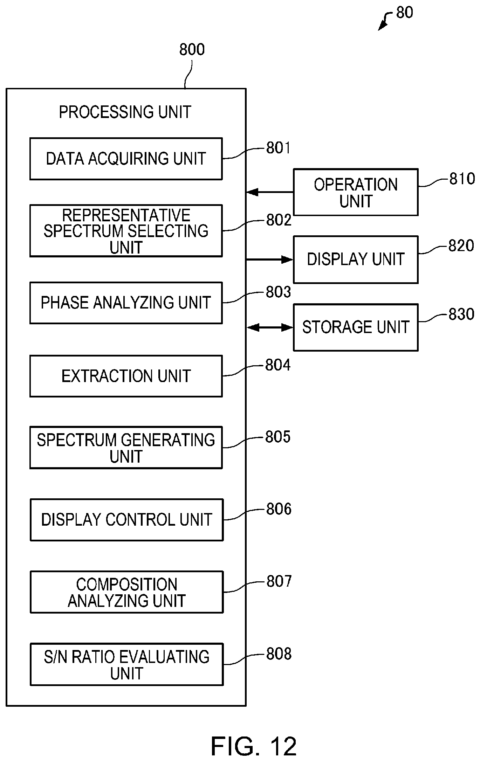

A spectrum processing device 80 according to Embodiment 2 will be described next with reference to the drawings. FIG. 12 illustrates a configuration of the spectrum processing device 80 according to Embodiment 2. In the following description on the spectrum processing device 80 according to Embodiment 2, a component member having a same function as that of the spectrum processing device 80 according to Embodiment 1 is denoted with a same reference sign, and detailed description thereof will be omitted.

The spectrum processing device 80 according to Embodiment 2 includes an S/N ratio evaluating unit 808, as illustrated in FIG. 12. The S/N ratio evaluating unit 808 evaluates the S/N ratio of the generated phase spectrum. For example, the S/N ratio evaluating unit 808 determines whether the S/N ratio of the phase spectrum is sufficient.

For the phase spectrum for determination acquired by adding the extracted pixel spectra 4, factors enabling a determination whether the S/N ratio is sufficient include a total count number of the signal amount of the phase spectrum, a count number of a maximum peak of the phase spectrum, the flatness of the phase spectrum in a region with no peak of the phase spectrum (dispersion of count number). Whereas for example for the phase spectrum for determination acquired by averaging the extracted pixel spectra 4, factors enabling a determination whether or not the S/N ratio is sufficient include the flatness of the phase spectrum in a region with no peak.

In the spectrum processing device 80 according to Embodiment 2, the threshold is automatically set. The other configuration of the specimen analyzing device 100 according to Embodiment 2 is the same as the configuration of the specimen analyzing device 100 according to Embodiment 1, and the description thereof will be omitted.

### 2.2. Spectrum Processing Method

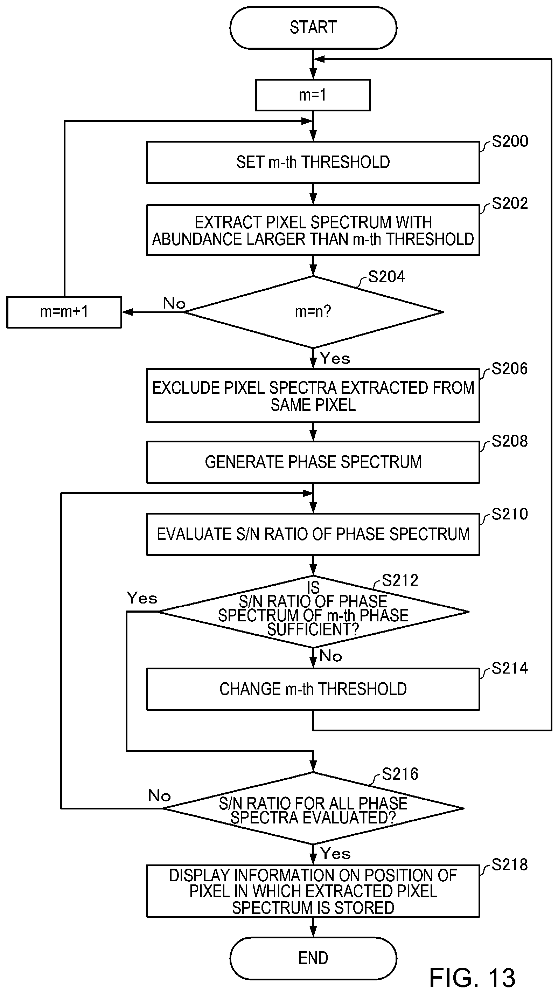

FIG. 13 is a flow chart illustrating an example of a flow of the process for generating phase spectrum of the spectrum processing device 80 according to Embodiment 2. In the following, aspects that are different from the above mentioned process for generating phase spectrum illustrated in FIG. 6 will be described, and description on the same aspects will be omitted.

The extraction unit 804 sets the m-th threshold to generate the phase spectrum of the m-th phase (S200). Here given m = 1, the extraction unit 804 sets the first threshold to generate the phase spectrum of the first phase. The extraction unit 804 sets the first threshold by reading information on the first threshold recorded in advance in the storage unit 830.

Then, for each pixel 2a of the spectrum imaging data 2, the extraction unit 804 calculates the abundance of the first representative spectrum in the pixel spectrum 4, and extracts each pixel spectrum 4 with an abundance larger than the first threshold (S202). The extraction unit 804 creates the first pixel data D-1 illustrated in FIG. 7, and causes the storage unit 830 to store this first pixel data D-1.

The extraction unit 804 determines whether the process for extracting the pixel spectrum 4 has been performed for all the phases (S204). The extraction unit 804 creates the first to n-th pixel data by repeating the process S200, S202 and S204 until it is determined that the process for extracting the pixel spectrum 4 has been performed for all the phases.

If the extraction unit 804 determines that the process for extracting the pixel spectrum 4 has been performed for all the phases (Yes in S204), it excludes from the first to n-th pixel data each pixel spectrum 4 extracted from a same pixel 2a (S206). The spectrum generating unit 805 generates the phase spectrum based on the extracted pixel spectra 4 (S208). In this manner the phase spectra of the first to n-th phases are generated.

Then the S/N ratio evaluating unit 808 evaluates the S/N ratios of the generated phase spectra (S210).

The S/N ratio evaluating unit 808 sequentially evaluates the S/N ratio from the phase spectrum of the first phase to the phase spectrum of the n-th phase, for example. The sequence of evaluating the S/N ratio for each phase spectrum, however, is not especially limited. In evaluating the S/N ratio for the phase spectrum of the first phase, the S/N ratio evaluating unit 808 determines whether the S/N ratio is sufficient depending on whether the total count number of the signal amount of the phase spectrum of the first phase exceeds a threshold. However, the S/N ratio evaluating unit 808 may determine whether the S/N ratio is sufficient depending on whether the count number of the maximum peak of the phase spectrum of the first phase exceeds a threshold, or may determine whether the S/N ratio is sufficient depending on whether dispersion of the count number in a region with no peak of the phase spectrum of the first phase is a threshold or less.

If the S/N ratio evaluating unit 808 determines that the S/N ratio of the phase spectrum of the first phase is not sufficient (No in S212), the extraction unit 804 changes the first threshold (S214). Specifically, the extraction unit 804 changes the first threshold to be lower than the first threshold prior to the change. The extraction unit 804 rewrites the information on the first threshold stored in the storage unit 830, and changes the first threshold thereby.

The extraction unit 804 returns to the process S200 and sets the first threshold again (S200). The extraction unit 804 reads the changed information on the first threshold stored in the storage unit 830, and sets the first threshold again.

For each pixel 2a, the extraction unit 804 calculates the abundance of the first representative spectrum in the pixel spectrum 4, and extracts a pixel spectrum 4 with abundance larger than the first threshold set again (S202). In this manner the first pixel data D-1 is created again. Since the first threshold is changed to be lower than the first threshold prior to the change, pixel spectra 4 included in the first pixel data D-1 created again are more than pixel spectra 4 included in the first pixel data D-1 prior to creating again.

The extraction unit 804 creates the first to n-th pixel data by repeating the processes S200, S202 and S204. Here the second to n-th thresholds are not changed, so that the second to n-th pixel data are not changed. In this manner the extraction unit 804 may omit the processes S200, S202 and S204 for creating the second to n-th pixel data.

If the extraction unit 804 determines that the process for extracting the pixel spectrum 4 has been performed for all the phases (Yes in S204), it excludes from the first to n-th pixel data each pixel spectrum 4 extracted from a same pixel 2a (S206). The spectrum generating unit 805 generates the phase spectrum based on the extracted pixel spectra 4 (S208). In this manner the phase spectra of the first to n-th phases are generated.

Then the S/N ratio evaluating unit 808 evaluates the S/N ratios of the generated phase spectra (S210). The S/N ratio evaluating unit 808 sequentially evaluates the S/N ratios from the phase spectrum of the first phase to the phase spectrum of the n-th phase. If the S/N ratio evaluating unit 808 determines that the S/N ratio of the phase spectrum of the first phase is sufficient (Yes in S212), it determines whether the S/N ratios have been evaluated for all the phase spectra (S216). If it is determined that the S/N ratios have not been evaluated for all the phase spectra (No in S216), the S/N ratio evaluating unit 808 returns to the process S210, and evaluates the S/N ratio of the phase spectrum of the second phase (S210).

If the S/N ratio evaluating unit 808 determines that the S/N ratio of the phase spectrum of the second phase is not sufficient (No in S212), the extraction unit 804 changes the second threshold (S214). Specifically, the extraction unit 804 changes the second threshold to be lower than the second threshold prior to the change. The extraction unit 804 rewrites the information on the second threshold stored in the storage unit 830, and changes the second threshold, for example.

The extraction unit 804 creates the first to n-th pixel data by repeating the processes S200, S202 and S204. Here the first threshold and the third to n-th thresholds are not changed, so that the extraction unit 804 may omit the processes S200, S202 and S204 for creating the first pixel data D-1 and the third to n-th pixel data.

If the extraction unit 804 determines that the process for extracting the pixel spectrum 4 has been performed for all the phases (Yes in S204), the extraction unit 804 excludes from the first to n-th pixel data each pixel spectrum 4 extracted from a same pixel 2a (S206). The spectrum generating unit 805 generates the phase spectrum based on the extracted pixel spectra 4 (S208). In this manner the phase spectra of the first to n-th phases are generated.

The processing unit 800 evaluates the S/N ratios of the phase spectra of the first to n-th phases by repeating the processes S212, S214, S216, S200, S202, S204, S206, S208 and S210. If the extraction unit 804 determines that the S/N ratio evaluating unit 808 has evaluated the S/N ratios for all the phase spectra (Yes in S216), the display control unit 806 causes the display unit 820 to display information on the positions of the extracted pixels 2a (S218). After causing the display unit 820 to display the information on the positions of the extracted pixels 2a, the processing unit 800 ends the process for generating phase spectrum.

### 2.3. Effects

The spectrum processing device 80 includes the S/N ratio evaluating unit 808 that determines whether the S/N ratio of the generated phase spectrum is sufficient. If the S/N ratio evaluating unit 808 determines that the S/N ratio is not sufficient, the extraction unit 804 sets a lower threshold, and extracts the pixel spectrum 4 with abundance larger than this threshold. In this manner the spectrum processing device 80 can set an appropriate threshold and generate a phase spectrum having a high S/N ratio.

### 3. Embodiment 3

### 3.1. Spectrum Processing Device

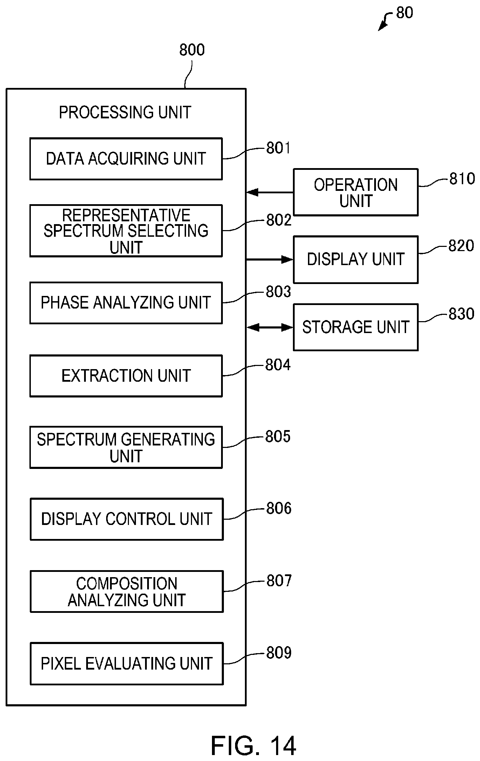

A spectrum processing device 80 according to Embodiment 3 will be described next with reference to the drawings. FIG. 14 illustrates a configuration of the spectrum processing device 80 according to Embodiment 3. In the following description on the spectrum processing device 80 according to Embodiment 3, a component member having a same function as that of the spectrum processing device 80 according to Embodiment 1 or Embodiment 2 is denoted with a same reference sign, and detailed description thereof will be omitted.

The spectrum processing device 80 according to Embodiment 3 includes a pixel evaluating unit 809, as illustrated in FIG. 14. The pixel evaluating unit 809 evaluates whether a position of a pixel (extracted pixel) 2a in which the extracted pixel spectrum 4 is stored is appropriate. The pixel evaluating unit 809 evaluates the positions of the extracted pixels 2a for each phase. In evaluating the positions of the extracted pixels 2a of the first phase, the pixel evaluating unit 809 acquires information on the positions of the extracted pixels 2a from the first pixel data D-1.

For example, the pixel evaluating unit 809 determines based on the density of the extracted pixels 2a whether the positions of the extracted pixels 2a are appropriate . The density of the extracted pixels 2a is a number of extracted pixels 2a included in a unit area. For substances of uniform composition, the extracted pixels 2a appear at a constant probability in a region with these substances. In other words, the density of the extracted pixels 2a is constant. Whereas for a specimen of not uniform but gradually changing composition, the abundance of the phase also changes gradually. In this manner the extracted pixels 2a do not appear at a constant probability either. In other words, under not uniform but gradually changing composition of a specimen, the density of the extracted pixels 2a is not constant. Hence based on the density of the extracted pixels 2a, determination can be made as per whether the positions of the extracted pixels 2a are appropriate.

For example, in the spectrum imaging data 2, a process for determining whether extracted pixels 2a are included in a predetermined region centered around a target extracted pixel 2a, is performed for all the extracted pixels 2a. If the user determines that at least 90% of the extracted pixels 2a are included in the predetermined region, the user determines that the density is uniform, and the positions of the extracted pixels 2a are appropriate.

The pixel evaluating unit 809 may also determine whether the positions of the extracted pixels 2a are appropriate by comparing the backscattered electron image and the positions of the extracted pixels 2a. The brightness values of the backscattered electron image depend on the average atomic number. In this manner the brightness values of the pixels of the backscattered electron image, corresponding to the extracted pixels 2a in the first pixel data D-1, are acquired, and a histogram of the brightness values is created, for example. The determination is possible that the positions of the extracted pixels 2a are appropriate with one peak in this histogram of the brightness values, and the positions of the extracted pixels 2a are not appropriate with at least two peaks in the histogram.

In the spectrum processing device 80 according to Embodiment 3, the threshold is automatically set, just like the spectrum processing device 80 according to Embodiment 2. The other configuration of the specimen analyzing device 100 according to Embodiment 3 is the same as the configuration of the specimen analyzing device 100 according to Embodiment 1, and the description thereof will be omitted.

### 3.2. Spectrum Processing Method

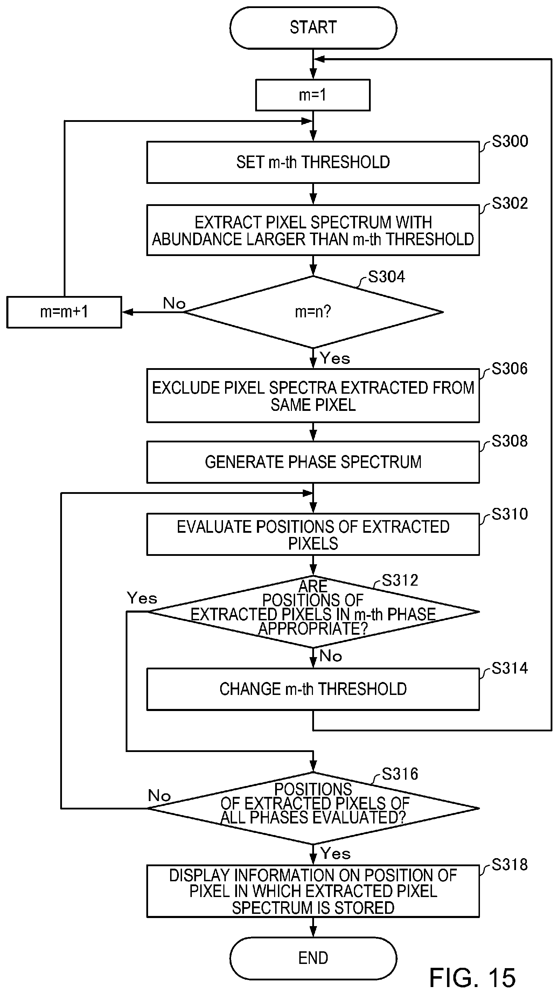

FIG. 15 is a flow chart illustrating an example of a flow of the process for generating phase spectrum of the spectrum processing device 80 according to Embodiment 3. In the following, aspects different from the above mentioned process for generating phase spectrum illustrated in FIG. 6 and FIG. 13 will be described, and description on the same aspects will be omitted.

The extraction unit 804 sets the m-th threshold to generate the phase spectrum of the m-th phase (S300). Here given m = 1, the extraction unit 804 sets the first threshold to generate the phase spectrum of the first phase. The extraction unit 804 sets the first threshold by reading information on the first threshold recorded in advance in the storage unit 830.

Then, for each pixel 2a of the spectrum imaging data 2, the extraction unit 804 calculates the abundance of the first representative spectrum in the pixel spectrum 4, and extracts each pixel spectrum 4 with the abundance larger than the first threshold (S302). The extraction unit 804 creates the first pixel data D-1 illustrated in FIG. 7, and causes the storage unit 830 to store this first pixel data D-1.

The extraction unit 804 determines whether the process for extracting the pixel spectrum 4 has been performed for all the phases (S304). The extraction unit 804 creates the first to n-th pixel data by repeating the processes S300, S302 and S304 until the determination that the process for extracting the pixel spectrum 4 has been performed for all the phases.

If the extraction unit 804 determines that the process for extracting the pixel spectrum 4 has been performed for all the phases (Yes in S304), it excludes each pixel spectrum 4 extracted from a same pixel 2a from the first to n-th pixel data (S306). The spectrum generating unit 805 generates the phase spectrum based on the extracted pixel spectra 4 (S308). In this manner the phase spectra of the first to n-th phases are generated.

Then the pixel evaluating unit 809 evaluates the positions of the extracted pixels 2a (S310).

The pixel evaluating unit 809 sequentially evaluates the positions of the extracted pixels 2a of the first phase to the n-th phase, for example. The sequence of evaluating the positions of the extracted pixels 2a, however, is not especially limited. In evaluating the positions of the extracted pixels 2a of the first phase, the pixel evaluating unit 809 acquires information on the positions of the extracted pixels 2a of the first phase from the first pixel data D-1, and determines whether the positions of the extracted pixels 2a are appropriate based on the density of the extracted pixels 2a. The pixel evaluating unit 809 may also determine whether the positions of the extracted pixels 2a are appropriate by comparing the backscattered electron image and the extracted pixels 2a.

If the pixel evaluating unit 809 determines that the positions of the extracted pixels 2a of the first phase are not appropriate (No in S312), the extraction unit 804 changes the first threshold (S314). Specifically, the extraction unit 804 changes the first threshold to be higher than the first threshold prior to the change. For example, the extraction unit 804 rewrites the information on the first threshold stored in the storage unit 830, and changes the first threshold.

The extraction unit 804 returns to the processing S300 and sets the first threshold again (S300). The extraction unit 804 reads the changed information on the first threshold stored in the storage unit 830, and sets the first threshold again.

For each pixel 2a, the extraction unit 804 calculates the abundance of the first representative spectrum in the pixel spectrum 4, and extracts a pixel spectrum 4 with the abundance larger than the first threshold which was set again (S302). In this manner the first pixel data D-1 is created again. Since the first threshold is changed to be higher than the original first threshold prior to the change, pixel spectra 4 included in the first pixel data D-1 created again are less than pixel spectra 4 included in the original first pixel data D-1 prior to creating again.

The extraction unit 804 creates the first to n-th pixel data by repeating the processes S300, S302 and S304. Here the second to n-th thresholds are not changed, therefore the extraction unit 804 may omit the processes S300, S302 and S304 for creating the second to n-th pixel data.

If the extraction unit 804 determines that the process for extracting the pixel spectrum 4 has been performed for all the phases (Yes in S304), the extraction unit 804 excludes from the first to n-th pixel data each pixel spectrum 4 extracted from the same pixel 2a (S306). The spectrum generating unit 805 generates the phase spectrum based on the extracted pixel spectra 4 (S308). In this manner the phase spectra of the first to n-th phases are generated.

Then the pixel evaluating unit 809 evaluates the positions of the extracted pixels 2a (S310). The pixel evaluating unit 809 sequentially evaluates the positions of the extracted pixels 2a of the first phase to the n-th phase. If it is determined that the positions of the extracted pixels 2a of the first phase are appropriate (Yes in S312), the pixel evaluating unit 809 determines whether the positions of the extracted pixels 2a of all the phases have been evaluated (S316). If the pixel evaluating unit 809 determines that the positions of the extracted pixels 2a of all the phases have not been evaluated (No in S316), it returns to the process S310, and evaluates the positions of the extracted pixels 2a of the second phase (S310).

If the pixel evaluating unit 809 determines that the positions of the extracted pixels 2a of the second phase are not appropriate (No in S312), the extraction unit 804 changes the second threshold (S314). Specifically, the extraction unit 804 changes the second threshold to be higher than the second threshold prior to the change. For example, the extraction unit 804 rewrites the information on the second threshold stored in the storage unit 830, and changes the second threshold.

The extraction unit 804 creates the first to n-th pixel data by repeating the processes S300, S302 and S304. Here the first threshold and the third to n-th thresholds are not changed, therefore the extraction unit 804 may omit the processes S300, S302 and S304 for creating the first pixel data D-1 and the third to n-th pixel data.

If the extraction unit 804 determines that the processing to extract the pixel spectra 4 has been performed for all the phases (Yes in S304), it excludes from the first to n-th pixel data each pixel spectrum 4 extracted from a same pixel 2a (S306). The spectrum generating unit 805 generates the phase spectrum based on the extracted pixel spectra 4 (S308). In this manner the phase spectra of the first to n-th phases are generated.

The processing unit 800 evaluates the positions of the extracted pixels 2a of the first to n-th phases by repeating the processes S312, S314, S316, S300, S302, S304, S306, S308 and S310. If the display control unit 806 determines that the pixel evaluating unit 809 has evaluated the extracted pixels 2a of all the phases (Yes in S316), the display control unit 806 causes the display unit 820 to display information on the positions of the extracted pixels 2a (S318). After causing the display unit 820 to display the information on the positions of the extracted pixels 2a, the processing unit 800 ends the process for generating phase spectrum.

### 3.3. Effects

The spectrum processing device 80 includes the pixel evaluating unit 809 that determines whether the position of each pixel 2a in which the extracted pixel spectrum 4 is stored is appropriate. If the pixel evaluating unit 809 determines that the positions of the extracted pixels 2a are not appropriate, the extraction unit 804 sets a higher threshold, and extracts the pixel spectrum 4 with the abundance larger than this threshold. Therefore, the spectrum processing device 80 can set an appropriate threshold, and extract a pixel spectrum 4 with the composition of the phase more purely expressed. Hence the composition of the phase can be more accurately identified.

### 4. Embodiment 4

### 4.1. Spectrum Processing Device

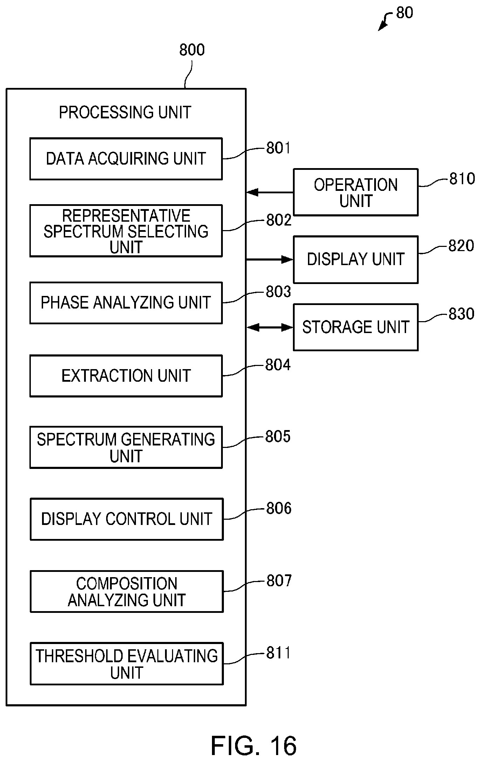

A spectrum processing device 80 according to Embodiment 4 will be described next with reference to the drawings. FIG. 16 illustrates a configuration of the spectrum processing device 80 according to Embodiment 4. In the following description on the spectrum processing device 80 according to Embodiment 4, a component member having a same function as a component member of the spectrum processing device 80 according to Embodiment 1, 2 or 3 is denoted with a same reference sign, and detailed description thereof will be omitted.

The spectrum processing device 80 according to Embodiment 4 includes a threshold evaluating unit 811, as illustrated in FIG. 16. The threshold evaluating unit 811 evaluates the threshold based on the S/N ratio of the phase spectrum and the positions of the extracted pixels 2a. For example, the threshold evaluating unit 811 determines whether the S/N ratio is sufficient using the same method as the S/N ratio evaluating unit 808 described above. Further, the threshold evaluating unit 811 determines whether the positions of the extracted pixels 2a are appropriate using the same method as the pixel evaluating unit 809 described above.

The threshold evaluating unit 811 determines that the threshold is not appropriate if: it determines that the S/N ratio is not sufficient and the positions of the extracted pixels 2a are not appropriate; that the S/N ratio is not sufficient and the positions of the extracted pixels 2a are appropriate; or that the S/N ratio is sufficient and the positions of the extracted pixels 2a are not appropriate. Further the threshold evaluating unit 811 determines that the threshold is appropriate if it determines that the S/N ratio is sufficient and the positions of the extracted pixels 2a are appropriate.

In the spectrum processing device 80 according to Embodiment 4, the threshold is automatically set, just like the spectrum processing device 80 according to Embodiment 2 or 3. The other configuration of the specimen analyzing device 100 according to Embodiment 4 is the same as that of the specimen analyzing device 100 according to Embodiment 1, and the description thereof will be omitted.

### 4.2. Spectrum Processing Method

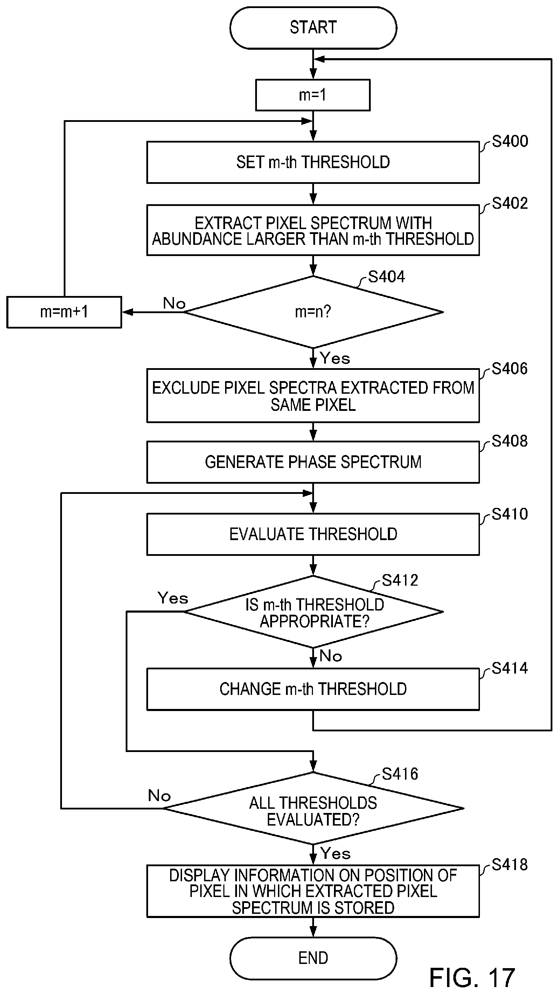

FIG. 17 is a flow chart illustrating an example of a flow of the process for generating phase spectrum of the spectrum processing device 80 according to Embodiment 4. In the following, aspects that are different from the above mentioned process for generating phase spectrum illustrated in FIG. 6, FIG. 13 and FIG. 15 will be described, and description on the same aspects will be omitted.

The extraction unit 804 sets the m-th threshold to generate the phase spectrum of the m-th phase (S400). Here given m = 1, the extraction unit 804 sets the first threshold to generate the phase spectrum of the first phase. The extraction unit 804 sets the first threshold by reading information on the first threshold which was recorded in advance in the storage unit 830.

Then, for each pixel 2a of the spectrum imaging data 2, the extraction unit 804 calculates the abundance of the first representative spectrum in the pixel spectrum 4, and extracts each pixel spectrum 4 with the abundance larger than the first threshold (S402). The extraction unit 804 creates the first pixel data D-1 illustrated in FIG. 7, and causes the storage unit 830 to store this first pixel data D-1.

The extraction unit 804 determines whether the process for extracting the pixel spectrum 4 has been performed for all the phases (S404). The extraction unit 804 creates the first to n-th pixel data by repeating the processes S400, S402 and S404 until it determines that the process for extracting the pixel spectrum 4 has been performed for all the phases.

If the extraction unit 804 determines that the process for extracting the pixel spectrum 4 has been performed for all the phases (Yes in S404), it excludes from the first to n-th pixel data each pixel spectrum 4 extracted from a same pixel 2a (S406). The spectrum generating unit 805 generates the phase spectrum based on the extracted pixel spectra 4 (S408). In this manner the phase spectra of the first to n-th phases are generated.

Then the threshold evaluating unit 811 evaluates the threshold (S410).

The threshold evaluating unit 811 sequentially evaluates each threshold of the first threshold to the n-th threshold, for example. The sequence of evaluating each threshold is not especially limited. In evaluating the first threshold, the threshold evaluating unit 811 evaluates the first threshold based on the S/N ratio of the phase spectrum of the first phase and the positions of the extracted pixels 2a of the first phase.

If the threshold evaluating unit 811 determines that the first threshold is not appropriate (No in S412), the extraction unit 804 changes the first threshold (S414).

The extraction unit 804 changes the first threshold based on the evaluation result of the first threshold performed by the threshold evaluating unit 811. For example, if the extraction unit 804 determines that the S/N ratio is not sufficient and the positions of the extracted pixels 2a are appropriate, it changes the first threshold to be lower than the first threshold prior to the change. If the extraction unit 804 determines that the S/N ratio is sufficient and the positions of the extracted pixels 2a are not appropriate, it changes the first threshold to be higher than the first threshold prior to the change. If the extraction unit 804 determines that the S/N ratio is not sufficient and the positions of the extracted pixels 2a are not appropriate, it calculates an optimum first threshold with a relatively high S/N ratio and a relatively high density of the extracted pixels 2a , for example, and rewrites the first threshold to this threshold. If the extraction unit 804 determines that the S/N ratio is not sufficient and the positions of the extracted pixels 2a are not appropriate, it may change the first threshold to be lower, assigning priority to making the S/N ratio to be sufficient, or may change the first threshold to be higher, assigning priority to making the positions of the extracted pixels 2a appropriate. The user may be entitled to select which of the S/N ratio or the positions of the extracted pixels 2a a priority in changing is assigned to.

The extraction unit 804 returns to the process S400 and sets the first threshold again (S400). The extraction unit 804 reads the changed information on the first threshold stored in the storage unit 830, and sets the first threshold again.

For each pixel 2a, the extraction unit 804 calculates the abundance of the first representative spectrum in the pixel spectrum 4, and extracts a pixel spectrum 4 with the abundance larger than the first threshold set again (S402). In this manner the first pixel data D-1 is created again.

The extraction unit 804 creates the first to n-th pixel data by repeating the processes S400, S402 and S404. Here the second to n-th thresholds are not changed, therefore the extraction unit 804 may omit the processes S400, S402 and S404 for creating the pixel data using the second to n-th thresholds.

If the extraction unit 804 determines that the process for extracting the pixel spectrum 4 has been performed for all the phases (Yes in S404), the extraction unit 804 excludes from the first to n-th pixel data each pixel spectrum 4 extracted from a same pixel 2a (S406). The spectrum generating unit 805 generates the phase spectrum based on the extracted pixel spectra 4 (S408). In this manner the phase spectra of the first to n-th phases are generated.

Then the threshold evaluating unit 811 evaluates each threshold (S410). The threshold evaluating unit 811 sequentially evaluates each threshold of the first to n-th thresholds. If the threshold evaluating unit 811 determines that the first threshold is appropriate (Yes in S412), it determines whether all the thresholds have been evaluated (S416). If the threshold evaluating unit 811 determines that all the thresholds have not been evaluated (No in S416), it returns to the process S410 and evaluates the second threshold (S410).

If the threshold evaluating unit 811 determines that the second threshold is not appropriate (No in S412), the extraction unit 804 changes the second threshold (S414). For example, the extraction unit 804 rewrites the information on the second threshold stored in the storage unit 830, and changes the second threshold.

The extraction unit 804 creates the first to n-th pixel data by repeating the processes S400, S402 and S404. Here the first threshold and the third to n-th thresholds are not changed, therefore the extraction unit 804 may omit the processes S400, S402 and S404 for creating the first pixel data D-1 and the third to n-th pixel data.

If the extraction unit 804 determines that the process for extracting the pixel spectrum 4 has been performed for all the phases (Yes in S404), it excludes from the first to n-th pixel data each pixel spectrum 4 extracted from a same pixel 2a (S406). The spectrum generating unit 805 generates the phase spectrum based on the extracted pixel spectra 4 (S408). In this manner the phase spectra of the first to n-th phases are generated.

The processing unit 800 repeats the processes S412, S414, S416, S400, S402, S404, S406, S408 and S410 sequentially for each phase spectrum of the first phase to the phase spectrum of the n-th phase. If the display control unit 806 determines that the threshold evaluating unit 811 have evaluated all the thresholds (Yes in S416), it causes the display unit 820 to display the information on the positions of the extracted pixels 2a (S418). After causing the display unit 820 to display the information on the positions of the extracted pixels 2a, the processing unit 800 ends the process for generating phase spectrum.

### 4.3. Effects

The spectrum processing device 80 includes the threshold evaluating unit 811 that evaluates the threshold based on the S/N ratio of the phase spectrum and the positions of the extracted pixels 2a. If the threshold evaluating unit 811 determines that the threshold is not appropriate, the extraction unit 804 sets a threshold based on the evaluation result of the threshold performed by the threshold evaluating unit 811, and extracts a pixel spectrum 4 with the abundance larger than the threshold. In this manner the spectrum processing device 80 can set an appropriate threshold and generate a phase spectrum having a high S/N ratio.

### 5. Modifications

### 5.1. Modification 1

In Embodiments 1 to 4 described above, the phase analyzing unit 803 creates the phase map by calculating the abundance of the representative spectrum in the pixel spectrum 4, but the technique for creating the phase map is not limited thereto. For example, the phase analyzing unit 803 may create the phase map by calculating the similarity between the pixel spectrum and the representative spectrum. Specifically, the phase analyzing unit 803 calculates the similarity between the pixel spectrum 4 and the representative spectrum for each pixel 2a of the spectrum imaging data 2, and creates data linking the similarity and the coordinates of the pixel 2a. This similarity can be calculated based on cosine similarity or Euclidean distance, for example. The phase analyzing unit 803 creates a phase map based on the data for linking the similarity and the coordinates of the pixel 2a. The phase analyzing unit 803 creates the phase map by expressing the similarity as pixel values, for example.

Further, for each pixel 2a, the extraction unit 804 calculates the abundance of the representative spectrum in the pixel spectrum 4, and extracts each pixel spectrum 4 with the abundance larger than the threshold, but the technique for extracting the pixel spectrum 4 is not limited thereto. For example, for each pixel 2a, the extraction unit 804 may calculate the similarity between each pixel spectrum 4 and the representative spectrum, and extract each pixel spectrum 4 with the similarity larger than a threshold. This similarity can be calculated based on the cosine similarity or the Euclidean distance, for example.

It is possible in the spectrum processing device 80 that even the pixel spectrum 4 with the similarity larger than the threshold, as extracted from the spectrum imaging data 2, do have operations and effects similar to the above mentioned pixel spectrum 4 with the abundance larger than the threshold, as extracted from the spectrum imaging data 2.

### 5.2. Modification 2

In Embodiments 1 to 4 described above, the representative spectrum selecting unit 802 selects the representative spectrum from the spectrum imaging data 2, but the technique for selecting the representative spectrum is not limited thereto. For example, the user may select the representative spectrum. Specifically, the user may select the representative spectrum by selecting a pixel 2a from the spectrum imaging data 2. In this case, the pixel spectrum 4 recorded in the selected pixel 2a is selected as the representative spectrum.

The user may select a pixel 2a from the spectrum imaging data 2 by specifying a position on an image of the specimen S, such as a secondary electron image and a backscattered electron image. In this case, the pixel spectrum 4 stored in the pixel 2a, corresponding to the position selected in the image of the specimen S, is selected as the representative spectrum. The user can select the representative spectrum using data supporting own decision, such as a secondary electron image, a backscattered electron image and an element map. The element map illustrates the distribution of the X-ray intensity or the distribution of the concentration of each element, and can be acquired from the spectrum imaging data 2.

### 5.3. Modification 3

In Embodiments 1 to 4 described above, the spectrum processing device 80 belongs to the specimen analyzing device 100, but the spectrum processing device 80 may not always belong to the specimen analyzing device 100. For example, the spectrum processing device 80 may acquire the spectrum imaging data 2 by reading the spectrum imaging data 2 stored in an information storage medium, or may acquire the spectrum imaging data 2 via a network from a server or the like (not illustrated).

### 5.4. Modification 4

In Embodiments 1 to 4 described above, the specimen analyzing device 100 is the scanning electron microscope equipped with the X-ray detector 70, but the specimen analyzing device 100 is not limited thereto. For example, the specimen analyzing device 100 may be any device that can acquire a spectrum based on signals (e.g. X-ray, electrons, ions) from the specimen S. For example, the specimen analyzing device 100 may be a transmission electron microscope equipped with an energy dispersive X-ray spectrometer or a wavelength dispersive X-ray spectrometer, an electron probe microanalyzer, an Auger microprobe, a photoelectron spectroscope, a focused ion beam system, or the like.

The embodiments and modifications described above are examples, and the present invention is not limited thereto. For example, each embodiment and modification may be combined as required.

The invention is not limited to the above-described embodiments, and various modifications can be made. For example, the invention includes configurations that are substantially the same as the configurations described in the embodiments. Substantially same configurations mean configurations having the same functions or methods, for example. The invention also includes configurations obtained by replacing non-essential elements of the configurations described in the embodiments with other elements. The invention further includes configurations obtained by adding known art to the configurations described in the embodiments.

## Claims

1. A spectrum processing device (80) comprising:
a data acquiring unit (801) configured to acquire, for each of pixels expressing positions on a specimen (S), spectrum imaging data (2) in which a pixel spectrum (4) based on a signal from the specimen is stored;
an extraction unit (804) configured to compare, for each of the pixels, the pixel spectrum (4) and a representative spectrum selected from the spectrum imaging data (2), and extract a plurality of the pixel spectra from the spectrum imaging data (2), based on a comparison result; and
a spectrum generating unit (805) configured to generate a phase spectrum, based on the plurality of the extracted pixel spectra (4), wherein
the extraction unit (804) is further configured to calculate, for each of the pixels, a first abundance of a first representative spectrum in the pixel spectrum (4), or a first similarity between the pixel spectrum (4) and the first representative spectrum, and create a first pixel data by extracting the pixel spectrum (4) with the first abundance or the first similarity larger than a first threshold, wherein
the extraction unit (804) is further configured to calculate, for each of the pixels, a second abundance of a second representative spectrum in the pixel spectrum (4), or a second similarity between the pixel spectrum (4) and the second representative spectrum, and create a second pixel data by extracting the pixel spectrum (4) with the second abundance or the second similarity larger than a second threshold, and wherein
the extraction unit (804) is further configured to exclude each pixel spectrum (4) extracted from a same pixel from the first pixel data and the second pixel data.

2. The spectrum processing device (80) according to claim 1, wherein
the extraction unit (804) is further configured to sets the thresholds based on the thresholds specified by a user.

3. The spectrum processing device (80) according to claim 1, further comprising
an S/N ratio evaluating unit (808) configured to determine whether an S/N ratio of the generated phase spectrum is sufficient, wherein
when the S/N evaluating unit (808) determines that the S/N ratio is not sufficient, the extraction unit (804) sets the threshold to a lower value, and extracts the pixel spectrum (4) with the abundance or the similarity larger than the threshold.

4. The spectrum processing device (80) according to claim 1, further comprising
a pixel evaluating unit (809) configured to determine whether the position of the pixel, in which the extracted pixel spectrum (4) is stored, is appropriate, wherein
in determining that the position of the pixel is not appropriate, the extraction unit (804) sets the threshold to a higher value, and extracts the pixel spectrum (4) with the abundance or the similarity larger than the threshold.

5. The spectrum processing device (80) according to claim 1, further comprising
a threshold evaluating unit (811) configured to evaluate the threshold, based on an S/N ratio of the generated phase spectrum and the position of the pixel in which the extracted pixel spectrum (4) is stored, wherein
the extraction unit (804) sets the threshold, based on an evaluation result of the threshold evaluated by the threshold evaluating unit (811), and extracts the pixel spectrum (4) with the abundance or the similarity larger than the threshold.

6. The spectrum processing device (80) according to any one of claims 1 to 5, further comprising
a display control unit (806) configured to cause a display unit (820) to display information on the position of the pixel in which the extracted pixel spectrum (4) is stored.

7. The spectrum processing device (80) according to claim 6, wherein
the display control unit (806) generates a map expressing the position of the pixel in which the extracted pixel spectrum (4) is stored, and causes the display unit (820) to display the map.

8. The spectrum processing device (80) according to claim 7, wherein
the display control unit (806) causes the display unit (820) to display an image of the specimen (S) and the map in a superimposed manner.

9. The spectrum processing device (80) according to any one of claims 1 to 8, wherein
the spectrum generating unit (805) generates the phase spectrum by adding or averaging a plurality of the extracted pixel spectra (4).

10. The spectrum processing device (80) according to any one of claims 1 to 9, further comprising a composition analyzing unit (807) configured to identify a composition of a phase from the phase spectrum.

11. The spectrum processing device (80) according to any one of the claims 1 to 10, further comprising a representative specimen selecting unit configured to select the representative spectrum from the spectrum imaging data.

12. A specimen analyzing device (100) comprising the spectrum processing device (80) according to any one of the claims 1 to 11.

13. A computer-implemented spectrum processing method comprising:
acquiring, for each of pixels expressing positions on a specimen (S), spectrum imaging data in which a pixel spectrum (4) based on a signal from the specimen (S) is stored;
comparing, for each of the pixels, the pixel spectrum (4) and a representative spectrum selected from the spectrum imaging data, and extracting a plurality of the pixel spectra (4) from the spectrum imaging data, based on a comparison result;
generating a phase spectrum, based on the plurality of the extracted pixel spectra (4);
calculating, for each of the pixels, a first abundance of a first representative spectrum in the pixel spectrum, or a first similarity between the pixel spectrum and the first representative spectrum, and creates a first pixel data by extracting the pixel spectrum (4) with the first abundance or the first similarity larger than a first threshold;
calculating, for each of the pixels, a second abundance of a second representative spectrum in the pixel spectrum (4), or a second similarity between the pixel spectrum (4) and the second representative spectrum, and creates a second pixel data by extracting the pixel spectrum (4) with the second abundance or the second similarity larger than a second threshold; and
excluding each pixel spectrum (4) extracted from a same pixel from the first pixel data and the second pixel data.

## Patentansprüche

1. Spektrum-Verarbeitungsvorrichtung (80), umfassend:
eine Datenerfassungseinheit (801), die dafür konfiguriert ist, für jedes von Pixeln, die Positionen auf einer Probe (S) ausdrücken, Spektrum-Bildgebungsdaten (2) zu erfassen, in denen ein Pixelspektrum (4) gespeichert ist, das auf einem Signal von der Probe beruht;
eine Extraktionseinheit (804), die dafür konfiguriert ist, für jedes der Pixel das Pixelspektrum (4) mit einem aus den Spektrum-Bildgebungsdaten (2) ausgewählten repräsentativen Spektrum zu vergleichen und auf der Grundlage eines Vergleichsergebnisses eine Vielzahl von Pixelspektren aus den Spektrum-Bildgebungsdaten (2) zu extrahieren; und
eine Spektrum-Erzeugungseinheit (805), die dafür konfiguriert ist, auf der Grundlage der Vielzahl von extrahierten Pixelspektren ein Phasenspektrum zu erzeugen (4), wobei
die Extraktionseinheit (804) ferner dafür konfiguriert ist, für jedes der Pixel eine erste Häufigkeit eines ersten repräsentativen Spektrums im Pixelspektrum (4) oder eine erste Ähnlichkeit zwischen dem Pixelspektrum (4) und dem ersten repräsentativen Spektrum zu berechnen und durch Extrahieren des Pixelspektrums (4), bei dem die erste Häufigkeit oder die erste Ähnlichkeit größer als ein erster Schwellenwert ist, erste Pixeldaten zu erzeugen, wobei
die Extraktionseinheit (804) ferner dafür konfiguriert ist, für jedes der Pixel eine zweite Häufigkeit eines zweiten repräsentativen Spektrums im Pixelspektrum (4) oder eine zweite Ähnlichkeit zwischen dem Pixelspektrum (4) und dem zweiten repräsentativen Spektrum zu berechnen und durch Extrahieren des Pixelspektrums (4), bei dem die zweite Häufigkeit oder die zweite Ähnlichkeit größer als ein zweiter Schwellenwert ist, zweite Pixeldaten zu erzeugen, und wobei
die Extraktionseinheit (804) ferner dafür konfiguriert ist, jedes Pixelspektrum (4), das aus einem gleichen Pixel extrahiert wurde, aus den ersten Pixeldaten und den zweiten Pixeldaten auszuschließen.

2. Spektrum-Verarbeitungsvorrichtung (80) nach Anspruch 1, wobei:
die Extraktionseinheit (804) ferner dafür konfiguriert ist, die Schwellenwerte auf der Grundlage der durch einen Benutzer festgelegten Schwellenwerte zu setzen.

3. Spektrum-Verarbeitungsvorrichtung (80) nach Anspruch 1, ferner umfassend:
eine Rauschabstand-Bewertungseinheit (808), die dafür konfiguriert ist, zu bestimmen, ob ein Rauschabstand des erzeugten Phasenspektrums ausreichend ist, wobei
wenn die Rauschabstand-Bewertungseinheit (808) bestimmt, dass der Rauschabstand nicht ausreichend ist, die Extraktionseinheit (804) den Schwellenwert auf einen niedrigeren Wert festlegt und das Pixelspektrum (4) extrahiert, bei dem die Häufigkeit oder die Ähnlichkeit größer als der Schwellenwert ist.

4. Spektrum-Verarbeitungsvorrichtung (80) nach Anspruch 1, ferner umfassend:
eine Pixel-Bewertungseinheit (809), die dafür konfiguriert ist, zu bestimmen, ob die Position des Pixels, in dem das extrahierte Pixelspektrum (4) gespeichert ist, richtig ist, wobei:
bei der Bestimmung, dass die Position des Pixels nicht richtig ist, die Extraktionseinheit (804) den Schwellenwert auf einen höheren Wert setzt und das Pixelspektrum (4) extrahiert, bei dem die Häufigkeit oder die Ähnlichkeit größer als der Schwellenwert ist.

5. Spektrum-Verarbeitungsvorrichtung (80) nach Anspruch 1, ferner umfassend:
eine Schwellenwert-Bewertungseinheit (811), die dafür konfiguriert ist, den Schwellenwert auf der Grundlage eines Rauschabstandes des erzeugten Phasenspektrums und der Position des Pixels, in dem das extrahierte Pixelspektrum (4) gespeichert ist, zu bewerten, wobei:
die Extraktionseinheit (804) den Schwellenwert auf der Grundlage eines Bewertungsergebnisses des durch die Schwellenwert-Bewertungseinheit (811) bewerteten Schwellenwerts setzt und das Pixelspektrum (4) extrahiert, bei dem die Häufigkeit oder die Ähnlichkeit größer als der Schwellenwert ist.

6. Spektrum-Verarbeitungsvorrichtung (80) nach einem der Ansprüche 1 bis 5, ferner umfassend:
eine Anzeigesteuerungseinheit (806), die dafür konfiguriert ist, eine Anzeigeeinheit (820) zu veranlassen, Informationen über die Position des Pixels anzuzeigen, in dem das extrahierte Pixelspektrum (4) gespeichert ist.

7. Spektrum-Verarbeitungsvorrichtung (80) nach Anspruch 6, wobei:
die Anzeigesteuerungseinheit (806) eine Karte erzeugt, welche die Position des Pixels darstellt, in dem das extrahierte Pixelspektrum (4) gespeichert ist, und die Anzeigeeinheit (820) veranlasst, die Karte anzuzeigen.

8. Spektrum-Verarbeitungsvorrichtung (80) nach Anspruch 7, wobei:
die Anzeigesteuerungseinheit (806) die Anzeigeeinheit (820) veranlasst, ein Bild der Probe (S) und die Karte auf überlagerte Weise darzustellen.

9. Spektrum-Verarbeitungsvorrichtung (80) nach einem der Ansprüche 1 bis 8, wobei:
die Spektrum-Erzeugungseinheit (805) das Phasenspektrum durch Addition oder Mittelwertbildung einer Vielzahl der extrahierten Pixelspektren (4) erzeugt.

10. Spektrum-Verarbeitungsvorrichtung (80) nach einem der Ansprüche 1 bis 9, weiter umfassend eine Zusammensetzungsanalyseeinheit (807), die dafür konfiguriert ist, aus dem Phasenspektrum eine Zusammensetzung einer Phase zu ermitteln.

11. Spektrum-Verarbeitungsvorrichtung (80) nach einem der Ansprüche 1 bis 10, weiter umfassend eine Auswähleinheit für repräsentative Proben, die dafür konfiguriert ist, das repräsentative Spektrum aus den Spektrum-Bildgebungsdaten auszuwählen.

12. Probenanalysevorrichtung (100), die Spektrum-Verarbeitungsvorrichtung (80) nach einem der Ansprüche 1 bis 11 umfassend.

13. Computerimplementiertes Spektrum-Verarbeitungsverfahren, umfassend:
für jedes von Pixeln, die Positionen auf einer Probe (S) darstellen, Erfassen von Spektrum-Bildgebungsdaten, in denen ein Pixelspektrum (4) gespeichert ist, das auf einem Signal von der Probe (S) beruht;
Vergleichen des Pixelspektrums (4) mit einem aus den Spektrum-Bildgebungsdaten ausgewählten repräsentativen Spektrum für jedes der Pixel und Extrahieren einer Vielzahl der Pixelspektren (4) aus den Spektrum-Bildgebungsdaten auf der Grundlage eines Vergleichsergebnisses;
Erzeugen eines Phasenspektrums auf der Grundlage der Vielzahl von extrahierten Pixelspektren (4);
Berechnen einer ersten Häufigkeit eines ersten repräsentativen Spektrums im Pixelspektrum oder einer ersten Ähnlichkeit zwischen dem Pixelspektrum und dem ersten repräsentativen Spektrum für jedes der Pixel und Erzeugen erster Pixeldaten durch Extrahieren des Pixelspektrums (4), bei dem die erste Häufigkeit oder die erste Ähnlichkeit größer als ein erster Schwellenwert ist;
Berechnen einer zweiten Häufigkeit eines zweiten repräsentativen Spektrums im Pixelspektrum (4) oder einer zweiten Ähnlichkeit zwischen dem Pixelspektrum (4) und dem zweiten repräsentativen Spektrum für jedes der Pixel und Erzeugen zweiter Pixeldaten durch Extrahieren des Pixelspektrums (4), bei dem die zweite Häufigkeit oder die zweite Ähnlichkeit größer als ein zweiter Schwellenwert ist; und
Ausschließen jedes Pixelspektrums (4) aus den ersten Pixeldaten und den zweiten Pixeldaten, das aus demselben Pixel extrahiert wurde.

## Revendications

1. Dispositif de traitement de spectre (80) comprenant :
une unité d'acquisition de données (801) configurée pour acquérir, pour chacun des pixels exprimant des positions sur un échantillon (S), des données d'imagerie de spectre (2) dans lesquelles un spectre de pixel (4) basé sur un signal provenant de l'échantillon est stocké ;
une unité d'extraction (804) configurée pour comparer, pour chacun des pixels, le spectre de pixel (4) et un spectre représentatif sélectionné à partir des données d'imagerie de spectre (2), et extraire une pluralité de spectres de pixel à partir des données d'imagerie de spectre (2), sur la base d'un résultat de comparaison ; et
une unité de génération de spectre (805) configurée pour générer un spectre de phase, sur la base de la pluralité des spectres de pixel extraits (4), dans lequel
l'unité d'extraction (804) est en outre configurée pour calculer, pour chacun des pixels, une première abondance d'un premier spectre représentatif dans le spectre de pixel (4), ou une première similarité entre le spectre de pixel (4) et le premier spectre représentatif, et créer des premières données de pixel en extrayant le spectre de pixel (4) avec la première abondance ou la première similarité supérieure à un premier seuil, dans lequel
l'unité d'extraction (804) est en outre configurée pour calculer, pour chacun des pixels, une seconde abondance d'un second spectre représentatif dans le spectre de pixel (4), ou une seconde similarité entre le spectre de pixel (4) et le second spectre représentatif, et créer des secondes données de pixel en extrayant le spectre de pixel (4) avec la seconde abondance ou la seconde similarité supérieure à un second seuil, et dans lequel
l'unité d'extraction (804) est en outre configurée pour exclure chaque spectre de pixel (4) extrait d'un même pixel à partir des premières données de pixel et des secondes données de pixel.

2. Dispositif de traitement de spectre (80) selon la revendication 1, dans lequel
l'unité d'extraction (804) est en outre configurée pour définir les seuils sur la base des seuils spécifiés par un utilisateur.

3. Dispositif de traitement de spectre (80) selon la revendication 1, comprenant en outre :
une unité d'évaluation de rapport S/N (808) configurée pour déterminer si un rapport S/N du spectre de phase généré est suffisant, dans lequel
quand l'unité d'évaluation de S/N (808) détermine que le rapport S/N n'est pas suffisant, l'unité d'extraction (804) fixe le seuil à une valeur inférieure et extrait le spectre de pixel (4) avec l'abondance ou la similarité supérieure au seuil.

4. Dispositif de traitement de spectre (80) selon la revendication 1, comprenant en outre :
une unité d'évaluation de pixel (809) configurée pour déterminer si la position du pixel, dans laquelle le spectre de pixel extrait (4) est stocké, est appropriée, dans lequel
lors de la détermination que la position du pixel n'est pas appropriée, l'unité d'extraction (804) fixe le seuil à une valeur plus élevée et extrait le spectre de pixel (4) avec l'abondance ou la similarité supérieure au seuil.

5. Dispositif de traitement de spectre (80) selon la revendication 1, comprenant en outre :
une unité d'évaluation de seuil (811) configurée pour évaluer le seuil, sur la base d'un rapport S/N entre le spectre de phase généré et la position du pixel dans laquelle le spectre de pixel extrait (4) est stocké, dans lequel
l'unité d'extraction (804) définit le seuil, sur la base d'un résultat d'évaluation du seuil évalué par l'unité d'évaluation de seuil (811), et extrait le spectre de pixel (4) avec l'abondance ou la similarité supérieure au seuil.

6. Dispositif de traitement de spectre (80) selon l'une quelconque des revendications 1 à 5, comprenant en outre
une unité de commande d'affichage (806) configurée pour amener une unité d'affichage (820) à afficher des informations sur la position du pixel dans laquelle le spectre de pixel extrait (4) est stocké.

7. Dispositif de traitement de spectre (80) selon la revendication 6, dans lequel
l'unité de commande d'affichage (806) génère une carte exprimant la position du pixel dans laquelle le spectre de pixel extrait (4) est stocké, et amène l'unité d'affichage (820) à afficher la carte.

8. Dispositif de traitement de spectre (80) selon la revendication 7, dans lequel
l'unité de commande d'affichage (806) amène l'unité d'affichage (820) à afficher une image de l'échantillon (S) et de la carte de manière superposée.

9. Dispositif de traitement de spectre (80) selon l'une quelconque des revendications 1 à 8, dans lequel
l'unité de génération de spectre (805) génère le spectre de phase en additionnant ou en moyennant une pluralité de spectres de pixel extraits (4).

10. Dispositif de traitement de spectre (80) selon l'une quelconque des revendications 1 à 9, comprenant en outre une unité d'analyse de composition (807) configurée pour identifier la composition d'une phase à partir du spectre de phase.

11. Dispositif de traitement de spectre (80) selon l'une quelconque des revendications 1 à 10, comprenant en outre une unité de sélection d'échantillon représentatif configurée pour sélectionner le spectre représentatif à partir des données d'imagerie de spectre.

12. Dispositif d'analyse d'échantillon (100) comprenant le dispositif de traitement de spectre (80) selon l'une quelconque des revendications 1 à 11.

13. Procédé de traitement d'image mis en œuvre par ordinateur, comprenant :
l'acquisition, pour chacun des pixels exprimant des positions sur un échantillon (S), de données d'imagerie de spectre dans lesquelles un spectre de pixel (4) sur la base d'un signal provenant de l'échantillon (S) est stocké ;
la comparaison, pour chacun des pixels, du spectre de pixel (4) et d'un spectre représentatif sélectionné à partir des données d'imagerie de spectre, et en extrayant une pluralité de spectres de pixel (4) à partir des données d'imagerie de spectre, sur la base d'un résultat de comparaison ;
la génération d'un spectre de phase, sur la base de la pluralité des spectres de pixel extraits (4);
le calcul, pour chacun des pixels, d'une première abondance d'un premier spectre représentatif dans le spectre de pixel, ou d'une première similarité entre le spectre de pixel et le premier spectre représentatif, et la création de premières données de pixel en extrayant le spectre de pixel (4) avec la première abondance ou la première similarité supérieure à un premier seuil ;
le calcul, pour chacun des pixels, d'une seconde abondance d'un second spectre représentatif dans le spectre de pixel (4), ou d'une seconde similarité entre le spectre de pixel (4) et le second spectre représentatif, et la création de secondes données de pixel en extrayant le spectre de pixel (4) avec la seconde abondance ou la seconde similarité supérieure à un second seuil ; et
l'exclusion de chaque spectre de pixel (4) extrait d'un même pixel à partir des premières données de pixel et des secondes données de pixel.
